# EUROPEAN PATENT APPLICATION

(11) **EP 4 693 159 A1**
(43) Date of publication of application: **11.02.2026**
(21) Application number: 24779634.5
(22) Date of filing: 18.03.2024
(51) Int. Cl.: G06Q 50/10, F24C 7/04, H05B 6/12

(54) **COOKING ASSISTANCE SYSTEM, COOKING ASSISTANCE METHOD, AND COOKING ASSISTANCE PROGRAM**

(30) Priority: 29.03.2023 JP 2023054348
(71) Applicant: Sony Group Corporation, Tokyo 108-0075 (JP)
(72) Inventor: HAYASHI, Teruaki, Tokyo 108-0075 (JP); AOYAMA, Kazumi, Tokyo 108-0075 (JP); NOMOTO, Tomoko, Tokyo 108-0075 (JP); FUJITA, Masahiro, Tokyo 108-0075 (JP)
(74) Representative: D Young & Co LLP
(86) International application number: PCT/JP2024/010446
(87) International publication number: WO 2024/203509

(57) **Abstract**

In a cooking support system, a storage or a Web server retains, for each cooking step of a plurality of cooking steps in which each of target states is defined by target parameters based on sensor data measurable at a time of cooking, recipe data including information indicating content of cooking work and information indicating the target state, a control unit compares a cooking state in the cooking step set as a target and the target state to thereby perform success or failure determination for cooking work in the cooking step set as the target, and, when it is determined that the cooking work has been unsuccessful, an information presentation unit presents information indicating that the cooking work has been unsuccessful.

## Description

### Field

The present disclosure relates to a cooking support system, a cooking support method, and a cooking support program.

### Background

Since a recipe to be referred to by a general cook usually includes many expressions and ambiguous descriptions premised on tacit knowledge, a cooking process changes because of differences in skills or interpretations of cooks, differences in cooking utensils or cooking environments, or the like and, as a result, the reproducibility of finish of a dish decreases.

In contrast, there is a cooking support system that supports heating power setting, a heating time, and volumes of ingredients in order to perform cooking according to a recipe.

### Citation List

### Patent Literature

Patent Literature 1: JP 2017 068785 A
Patent Literature 2: JP 2019-219096 A

### Summary

### Technical Problem

However, in the cooking support system of the related art, since support for urging an appropriate cooking work corresponding to a cooking situation to the cook is not performed, the reproducibility of finish of a dish sometimes decreases.

Therefore, the present disclosure proposes a technique that can increase the reproducibility of finish of a dish.

### Solution to Problem

A cooking support system includes a retaining unit, a control unit and a presentation unit. The retaining unit retains, for each cooking step of a plurality of cooking steps in which each of target states is defined by target parameters based on sensor data measurable at a time of cooking, recipe data including information indicating content of cooking work and information indicating the target state. The control unit compares a cooking state in the cooking step set as a target and the target state to thereby perform success or failure determination for cooking work in the cooking step set as the target. And the presentation unit, when it is determined that the cooking work has been unsuccessful, presents information indicating that the cooking work has been unsuccessful.

### Brief Description of Drawings

FIG. 1 is a diagram illustrating an overall flow of a cooking process according to a first embodiment of the present disclosure.
FIG. 2 is a diagram illustrating an example of cooking based on recipe data according to the first embodiment of the present disclosure.
FIG. 3 is a diagram illustrating an equipment configuration example of a cooking support system according to the first embodiment of the present disclosure.
FIG. 4 is a block diagram illustrating a functional configuration example of the cooking support system according to the first embodiment of the present disclosure.
FIG. 5 is a block diagram illustrating a functional configuration example of the cooking support system according to the first embodiment of the present disclosure.
FIG. 6 is a diagram illustrating an example of information included in recipe data according to the first embodiment of the present disclosure.
FIG. 7 is a diagram illustrating an example of information concerning cooking conditions according to the first embodiment of the present disclosure.
FIG. 8 is a diagram illustrating an example of information concerning a cooking step according to the first embodiment of the present disclosure.
FIG. 9 is a diagram illustrating an example of a processing procedure of recording cooking according to the first embodiment of the present disclosure.
FIG. 10 is a diagram illustrating an example of a processing procedure of recipe data creation according to the first embodiment of the present disclosure.
FIG. 11 is a diagram illustrating an example of information concerning cooking steps included in recipe data according to the first embodiment of the present disclosure.
FIG. 12 is a diagram illustrating an example of a processing procedure of reproduction cooking according to the first embodiment of the present disclosure.
FIG. 13 is a diagram illustrating a display example of a navigation screen according to the first embodiment of the present disclosure.
FIG. 14 is a diagram illustrating another display example of the navigation screen according to the first embodiment of the present disclosure.
FIG. 15 is a diagram illustrating another display example of the navigation screen according to the first embodiment of the present disclosure.
FIG. 16 is a diagram illustrating an example of a processing procedure in a reproduction processing unit according to a second embodiment of the present disclosure.
FIG. 17 is a diagram illustrating an example of information concerning a cooking step included in recipe data according to the second embodiment of the present disclosure.
FIG. 18 is a diagram illustrating an example of information concerning cooking steps included in recipe data according to the second embodiment of the present disclosure.
FIG. 19 is a diagram illustrating an example of success information according to the second embodiment of the present disclosure.
FIG. 20 is a diagram illustrating an example of failure information according to the second embodiment of the present disclosure.
FIG. 21 is a diagram illustrating an example of failure information according to the second embodiment of the present disclosure.
FIG. 22 is a diagram illustrating an operation example of a change in the order of cooking steps according to the second embodiment of the present disclosure.
FIG. 23 is a diagram illustrating an operation example of a change in the order of cooking steps according to the second embodiment of the present disclosure.
FIG. 24 is a diagram illustrating an operation example of a change in content of cooking steps according to the second embodiment of the present disclosure.
FIG. 25 is a diagram illustrating an operation example of a change in content of cooking steps according to the second embodiment of the present disclosure.
FIG. 26 is a diagram illustrating a hardware configuration example of a computer according to a third embodiment of the present disclosure.

### Description of Embodiments

Embodiments of the present disclosure are explained below with reference to the drawings. In the embodiments explained below, redundant explanation is sometimes omitted by denoting the same parts or the same kinds of processing with the same reference numerals and signs.

The technology of the present disclosure is explained according to the order of items described below.

### [First Embodiment]

<Assumed use scene>
<Cooking process>
<Recording/reproduction processing>
<Normal recipe creation>
<Recording cooking>
<Recipe data creation>
<Reproduction cooking>
<Reproducibility evaluation>
<Equipment configuration of the cooking support system>
<Functional configuration of the cooking support system>
<Information included in recipe data>
<Recording and use of information concerning cooking conditions and information concerning cooking steps>
<Normal recipe creation>
<Recording cooking>
<Recipe data creation>
<Reproduction cooking>
<Reproducibility evaluation>

### [Second Embodiment]

<Processing procedure in a reproduction processing unit>
<Information concerning cooking steps included in recipe data>
<Success information and failure information>
<Change in the order of the cooking steps>
<Change of content of the cooking steps>
<Recognition of a cook posture>

### [Third Embodiment]

### [Effects of the technology of the disclosure]

### [First Embodiment]

### <Assumed use scene>

The technology of the present disclosure relates to a cooking support system, which is a system that supports cooking in an environment such as a kitchen. The technology of the present disclosure is applicable to a cooking support system using a heating cook such as an IH (Induction Heating) stove or a gas stove.

In the cooking support system to which the technology of the present disclosure is applied, various sensor devices for measuring cooking states are provided. Based on measurement results by the sensor devices, time-series sensor data indicating states of ingredients and the like in the process of cooking is recorded.

Based on recipe data created using recording data including the sensor data, support of cooking work for a cook who intends to reproduce a dish is performed. The support of the cooking work is performed in order to accurately reproduce the finish of the dish.

The cooking for reproducing the finish of the dish may be performed in a state in which a part of operation such as adjustment of heating power of a heating cook is automated. A cook, who is a user of the cooking support system, performs work such as input and stirring of ingredients according to navigation by a UI (User Interface).

Dish means a product finished through cooking. Cooking means a process of making the dish or an action (work) of preparing the dish.

### <Cooking process>

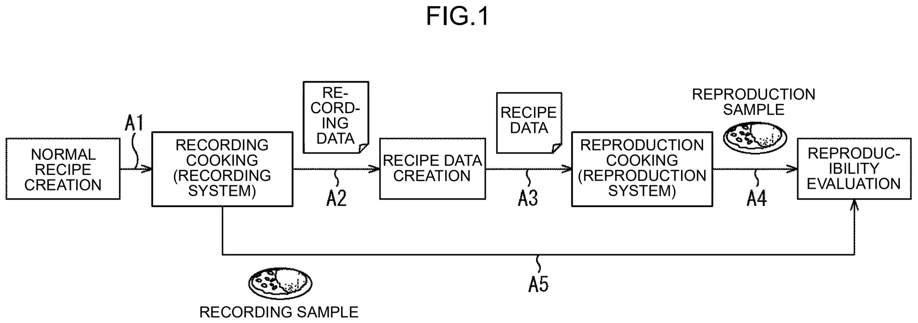

FIG. 1 is a diagram illustrating an overall flow of a cooking process according to a first embodiment of the present disclosure.

In FIG. 1, after "normal recipe creation", "recording cooking" is performed as indicated by the tip of an arrow A1 and sensor data indicating a measurement result in the recording cooking is recorded.

Subsequently, as indicated by the tip of an arrow A2, "recipe data creation" is performed based on recording data including the recorded sensor data and recipe data is created. The recipe data is data that can be processed by a computer. Information concerning a normal recipe in the preceding stage is also used to create the recipe data.

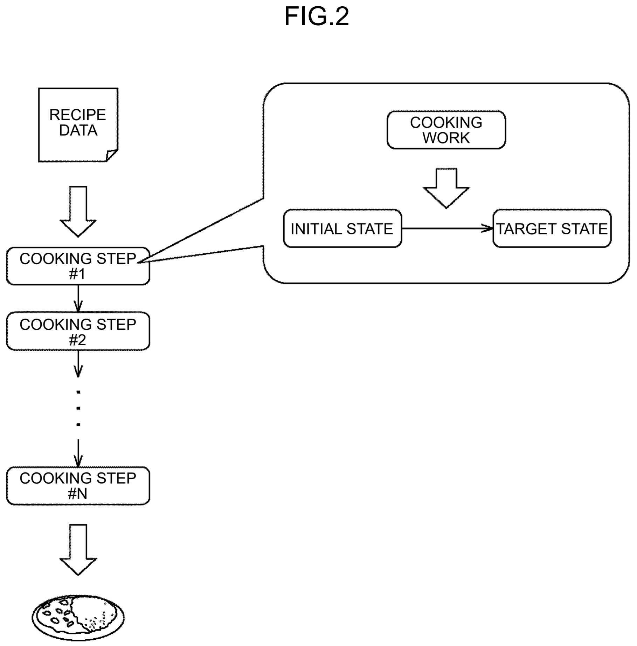

In the recipe data, content of respective cooking steps up to completion of a dish is described as follows. Usually, one dish is completed through a plurality of cooking steps as illustrated in FIG. 2. FIG. 2 is a diagram illustrating an example of cooking based on recipe data according to the first embodiment of the present disclosure.
1. The entire cooking process includes a plurality of cooking steps that are continuous in time series.
2. For each cooking step, cooking work and a target state are defined as indicated by a balloon in FIG. 2.
3. The cooking work indicates operation on cooking equipment and ingredients.
4. The target state indicates a condition for ending a certain cooking step and shifting to the next cooking step.
   (1) The condition for shifting to the next cooking step is defined using, as an indicator, a numerical value based on data that can be measured by the cooking support system.
   (2) Timing when the condition for shifting to the next cooking step is reached is represented to be able to be uniquely specified on time-series data detectable by the cooking support system.
5. The target state is defined by cooking parameters that can be measured by the cooking support system. As an example, values of TTW (Time/Temperature/Weight) are values of the target parameters that define the target state of the cooking parameters.
   Time: elapsed time [sec] from start time of a cooking step
   Temperature: temperature [°C] of a heating target object or a heating medium
   Weight: weight [g] of the heating target object
6. Initial state is defined for each ingredient used in cooking steps.
   Initial State I. Temperature [°C] of an ingredient at the time when an ingredient is put in a cooking utensil such as a pot
   Initial state II. Weight [g] of the ingredient put in the cooking utensil such as a pot

As explained above, in the cooking support system to which the technology of the present disclosure is applied, the recipe data indicating the target states and the initial states defined using the indicator that does not have person-dependency and can be interpreted is created for all the cooking steps. As explained below, various kinds of additional information other than the information indicating the target states and the initial states are retained by the recipe data.

Referring back to FIG. 1, as indicated by the tip of an arrow A3, "reproduction cooking" for enabling the finish of a dish to be reproduced with high accuracy is performed using the recipe data, and the dish is reproduced.

The reproduction cooking is performed according to the following rules 1, 2, and 3.

Rule 1: Execute cooking work at start timings of each cooking step.

Rule 2: Start the next cooking step at timing when a condition of a target state of each cooking process is reached.

Rule 3: Match an initial state at the time of putting in each ingredient.

In order to uniquely determine the timing when the condition of the target state of the rule 2 is reached, the properties of 4(1) and 4(2) above are important. When various conditions are determined and information is displayed on a UI device such as a display and cooking work is left to a cook, these rules are also applied to reproduction cooking in common.

As indicated by the tips of arrows A4 and A5 in FIG. 1, reproducibility evaluation is performed using a dish finished by the recording cooking and a dish finished by the reproduction cooking. By the reproduction cooking being performed, variations in a cooking process due to differences in skills and interpretations of cooks, differences in cooking utensils and cooking environments, and the like are suppressed and a dish having high reproducibility can be stably made.

### <Recording/reproduction processing>

Kinds of processing illustrated in FIG. 1 are explained. Recording/reproduction processing of a cooking process includes kinds of processing such as "normal recipe creation", "recording cooking", "recipe data creation", "reproduction cooking", and "reproducibility evaluation".

### <Normal recipe creation>

The normal recipe creation is processing in which a person creates a normal recipe that is a recipe of a target dish in the recording/reproduction processing. A normal recipe including content that can be understood by a cook who performs recording cooking is created using an any medium or expression form.

### <Recording cooking>

The recording cooking is processing in which the cook performs cooking according to the normal recipe and a recording system records data of a process of the cooking. The recording system is implemented by the cooking support system. Time series data and the like of cooking parameters measured by sensors are recorded as recording data. A dish finished by the recording cooking is referred to as "recording sample".

### <Recipe data creation>

The recipe data creation is processing in which the cooking support system creates recipe data, which is data used for the reproduction cooking, based on the recording data. The creation of the recipe data is performed as appropriate based on data input by a person. The recipe data is recorded as digital data and used as input to a reproduction system at the time of the reproduction cooking. According to necessity, the recipe data is also used to present information that can be understood by the person.

### <Reproduction cooking>

The reproduction cooking is processing of presenting information concerning cooking work to a cook based on the recipe data. According to the presented information, the cook performs the cooking work in the reproduction system. The reproduction system is also implemented by the cooking support system. A dish finished by the reproduction cooking is referred to as "reproduction sample".

### <Reproducibility evaluation>

The reproducibility evaluation is processing of comparing the recording sample finished by the recording cooking and the reproduction sample finished by the reproduction cooking and evaluating the reproducibility of the reproduction sample.

### <Equipment configuration of the cooking support system>

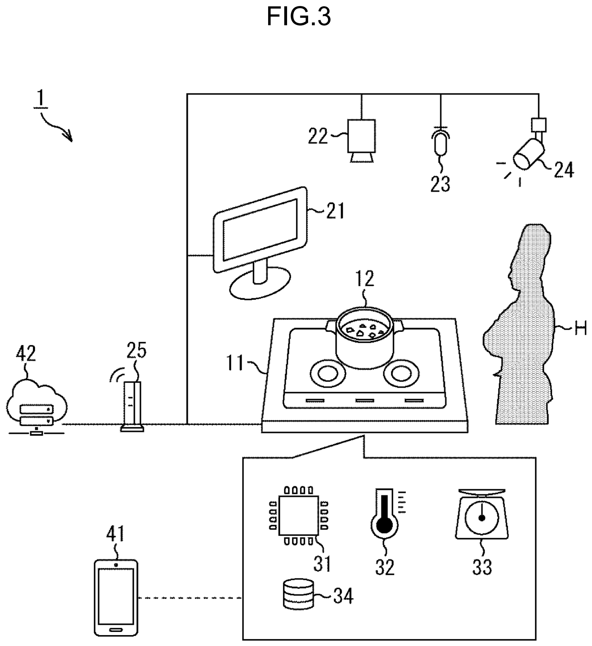

FIG. 3 is a diagram illustrating an equipment configuration example of the cooking support system according to the first embodiment of the present disclosure.

In FIG. 3, a cooking support system 1 is a type of so-called smart cooking equipment. The cooking support system 1 supports heating cooking in which cooking utensils such as a pot and a frying pan are used. Note that the cooking utensils are utensils handled by a cook H, such as a pot, a frying pan, or a spatula. The cooking equipment includes electrically driven equipment such as an IH stove besides the cooking utensils.

The cooking support system 1 is configured by a display 21, a camera 22, a microphone 23, lighting equipment 24, and a router 25 being connected to an IH stove 11. The respective kinds of equipment are connected to the IH stove 11 by wired communication or by wireless communication such as a wireless LAN.

The IH stove 11 heats a cooking utensil 12 such as a pot or a frying pan. A case in which the cooking utensil 12 is a pot is mainly explained below as an example.

As indicated by a balloon in FIG. 3, the IH stove 11 incorporates a processor 31, a temperature sensor 32, a weight sensor 33, and a storage 34.

The processor 31 controls the respective devices configuring the cooking support system 1 and communicates with external equipment, a Web server 42, and the like. The communication with the Web server 42 is performed via the router 25.

Further, the processor 31 detects an instruction of the cook H input via an input UI device such as the microphone 23. The processor 31 detects a motion of the cook H using an image captured by the camera 22. For example, the processor 31 also controls photographing conditions of the camera 22 by, for example, adjusting the brightness of the lighting equipment 24.

The temperature sensor 32 measures the temperature of the pot or the temperature of a cooking target object in the pot. In this case, the pot is a heating medium and an ingredient, which that is the cooking target object, in the pot is a heating target object. As the temperature sensor 32, for example, a radiation thermometer (for example, an infrared sensor) having high responsiveness and capable of performing non-contact measurement is used. Both of the temperature of the pot and the temperature of the cooking target object may be measured by the temperature sensor 32. The temperature sensor 32 is one of sensor devices that detect a state of the cooking target object.

The weight sensor 33 measures the weight of the cooking target object in the pot. As the weight sensor 33, for example, a force gauge is used. The weight sensor 33 is provided, for example, under a top plate of the IH stove 11. The weight sensor 33 is one of the sensor devices that detect a state of the cooking target object.

The display 21 displays various screens under control of the processor 31. For example, the display 21 is provided near the IH stove 11. Various kinds of information are presented to the cook H using display of the display 21. The display 21 is configured by a video display device such as a liquid crystal monitor or a projector. A wearable display such as AR (Augmented Reality) glasses may be used as the display 21.

Instead of the display 21 or together with the display 21, an information presentation device for a sensation other than vision, such as a speaker or a haptics device, may be prepared in the cooking support system 1 as an output UI device.

The camera 22 images a state of a hand of the cook H together with a state of the cooking target object in the pot. For example, the camera 22 is installed above the IH stove 11 with an angle of view directed to the pot. An image captured by the camera 22 is transmitted to the processor 31 in real time. The camera 22 is one of sensor devices that detect states of the cooking target object and the cook H. As the camera 22, for example, a normal visible light camera is used. Not only the visible light camera but also a thermographic camera and a hyperspectral camera can be installed as the camera 22.

As a variation of a physical configuration, the sensor devices such as the temperature sensor 32 and the weight sensor 33 may be incorporated in the pot, which is a heating medium.

As the input UI device for inputting various kinds of information to the cooking support system 1 explained above, a mobile terminal 41 such as a smartphone or a tablet terminal may be used besides the microphone 23. Information input by the cook H using the mobile terminal 41 is acquired by the processor 31.

### <Functional configuration of the cooking support system>

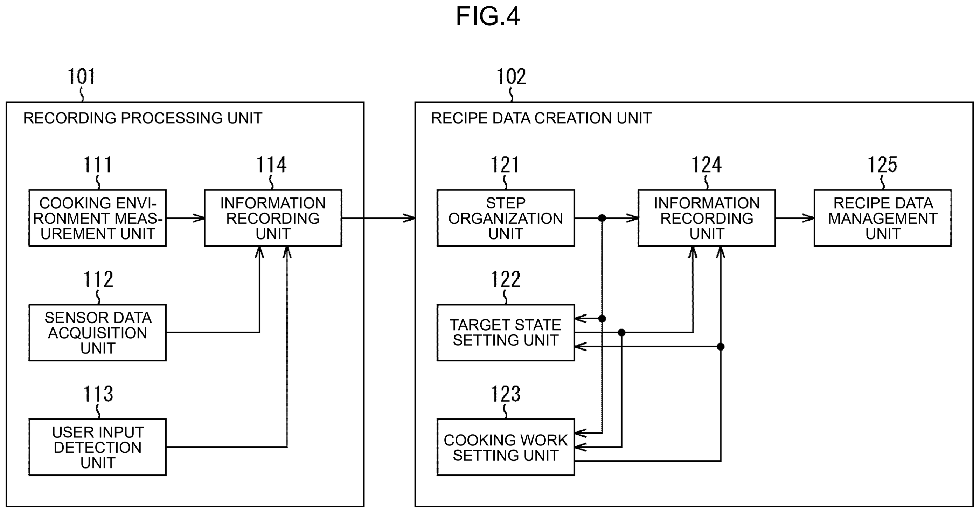

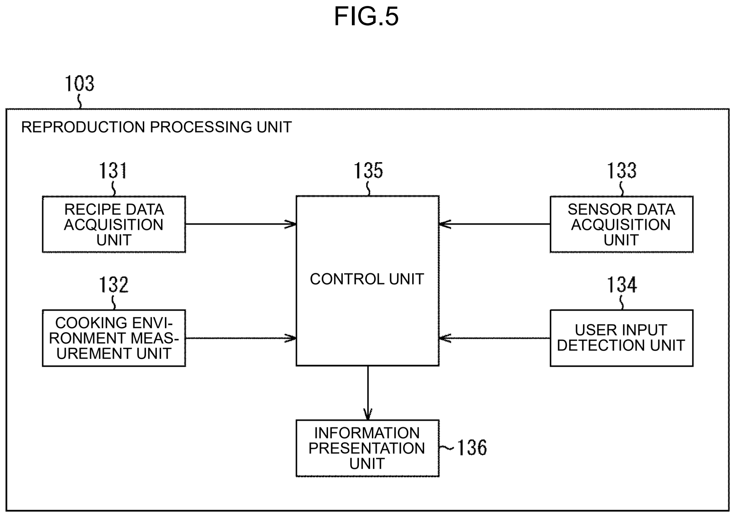

FIG. 4 and FIG. 5 are block diagrams illustrating a functional configuration example of the cooking support system according to the first embodiment of the present disclosure.

As illustrated in FIG. 4 and FIG. 5, the cooking support system 1 includes, as functional blocks, a recording processing unit 101, a recipe data creation unit 102, and a reproduction processing unit 103. At least a part of the configuration illustrated in FIG. 4 and FIG. 5 is implemented by a predetermined program being executed by the processor 31.

In FIG. 4, the recording processing unit 101 performs processing at the time of the recording cooking and a recording system is implemented by the recording processing unit 101. The recording processing unit 101 includes a cooking environment measurement unit 111, a sensor data acquisition unit 112, a user input detection unit 113, and an information recording unit 114.

The cooking environment measurement unit 111 measures an environment in which the recording cooking is performed, for example, at the start of the recording cooking. Information concerning the cooking environment measured by the cooking environment measurement unit 111 is supplied to the information recording unit 114.

For example, after the recording cooking is started, the sensor data acquisition unit 112 acquires sensor data used for generating recipe data. For example, during cooking of the recording cooking, time-series data of a time measured by a timer on the inside of the processor 31, temperature measured by the temperature sensor 32, and weight measured by the weight sensor 33 is acquired. The sensor data acquired by the sensor data acquisition unit 112 is supplied to the information recording unit 114.

The user input detection unit 113 detects input of the cook H to the input UI device such as the microphone 23 or an operation button and outputs information indicating content of the input to the information recording unit 114. For example, when the cook H or an assistance staff member presses the operation button at timing important for recipe data creation, information indicating the pressing is output to the information recording unit 114 and a time stamp is recorded. The recorded time stamp is referred to in the recipe data creation processing and used for, for example, organization of cooking steps. Timing when the time stamp is recorded may be input by a behavior or utterance of the cook H in the recording cooking rather than the operation on the operation button.

The information recording unit 114 generates recording data by recording, in a predetermined format, the information concerning the cooking environment supplied from the cooking environment measurement unit 111 and the sensor data supplied from the sensor data acquisition unit 112. When the recording cooking ends, recording data in which sensor data and the like acquired between the start and the end of the recording cooking are recorded is generated. The recording data generated by the information recording unit 114 is supplied to the recipe data creation unit 102 at timing such as time of recipe data creation.

In addition, in FIG. 4, the recipe data creation unit 102 performs processing at the time of the recipe data creation based on recording data including time-series data of sensor data measured during the recording cooking. The recipe data creation unit 102 functions as an information processing unit that creates recipe data for respective cooking steps in which target states are defined by values of sensor data that can be measured at the time of the reproduction cooking. The recipe data created by the recipe data creation unit 102 includes at least information indicating content of cooking work and information indicating the target states.

The recipe data creation unit 102 includes a step organization unit 121, a target state setting unit 122, a cooking work setting unit 123, an information recording unit 124, and a recipe data management unit 125.

The step organization unit 121 performs step organization by dividing an entire cooking process of the recording cooking into a plurality of cooking steps. Information concerning the respective cooking steps set by the step organization by the step organization unit 121 is supplied to the target state setting unit 122, the cooking work setting unit 123, and the information recording unit 124.

The target state setting unit 122 sets target states of the respective cooking steps set by the step organization unit 121. Information concerning the target states set by the target state setting unit 122 is supplied to the cooking work setting unit 123 and the information recording unit 124. A way of influence on a cooking parameter profile changes depending on content of the cooking work. The target states are set as appropriate according to the cooking work set by the cooking work setting unit 123.

The cooking work setting unit 123 sets content of the cooking work in the respective cooking steps set by the step organization unit 121. As the cooking work, for example, work for changing states of heating target objects such as ingredients used in the respective cooking steps to states defined as the target states is set. The information indicating the content of the cooking work set by the cooking work setting unit 123 is supplied to the information recording unit 124 and the target state setting unit 122.

The information recording unit 124 creates recipe data including the respective kinds of information by recording the recording data supplied from the recording processing unit 101 and the information supplied from each of the step organization unit 121, the target state setting unit 122, and the cooking work setting unit 123 in a predetermined format. The recipe data includes the information concerning the respective cooking steps and the information indicating the target states of the cooking steps and the cooking work together with the information concerning the cooking environment measured at the time of the recording cooking and the time-series data of the sensor data. The recipe data created by the information recording unit 124 is supplied to the recipe data management unit 125.

The recipe data management unit 125 manages the recipe data created by the information recording unit 124 by, for example, causing the storage 34 to record the recipe data. In the storage 34, recipe data for various dishes is recorded for each of the dishes.

A database (DB) of the recipe data may be prepared in the Web server 42 and the recipe data may be managed in the Web server 42. In this case, the recipe data management unit 125 transmits the recipe data created by the information recording unit 124 to the Web server 42 and causes the Web server 42 to manage the recipe data.

In FIG. 5, the reproduction processing unit 103 performs processing at the time of reproduction cooking and a reproduction system is implemented by the reproduction processing unit 103. The reproduction processing unit 103 includes a recipe data acquisition unit 131, a cooking environment measurement unit 132, a sensor data acquisition unit 133, a user input detection unit 134, a control unit 135, and an information presentation unit 136.

The recipe data acquisition unit 131 acquires recipe data of a dish, which is a target of the reproduction cooking, from the storage 34 or the Web server 42 and retains the recipe data. The recipe data acquisition unit 131 functions as a retaining unit that retains recipe data. The acquisition of the recipe data is performed, for example, when the cook H selects the dish, which is the target of the reproduction cooking. The recipe data acquired by the recipe data acquisition unit 131 is supplied to the control unit 135.

The cooking environment measurement unit 132 measures an environment in which the reproduction cooking is performed, for example, at time when the reproduction cooking is started. Information concerning the cooking environment measured by the cooking environment measurement unit 132 is supplied to the control unit 135.

The sensor data acquisition unit 133 acquires sensor data measured by the respective sensors, for example, after the reproduction cooking is started. For example, during cooking of the reproduction cooking, time-series data of a time measured by the timer on the inside of the processor 31, temperature measured by the temperature sensor 32, and weight measured by the weight sensor 33 is acquired. The sensor data acquired by the sensor data acquisition unit 133 is supplied to the control unit 135.

The user input detection unit 134 detects input of the cook H to the input UI device such as the microphone 23 or the operation button. For example, timing of transition of the cooking steps is input by the cook H. Information indicating content of the input detected by the user input detection unit 134 is supplied to the control unit 135.

The control unit 135 controls progress of the reproduction cooking based on the recipe data supplied from the recipe data acquisition unit 131.

For example, in the case in which a target state is defined by an elapsed time from a start of a target cooking step (a cooking step being executed), when the elapsed time from the start of the cooking step reaches a time defined as the target state, the control unit 135 causes the cook H to start cooking of the next cooking step.

Furthermore, for example, in the case in which the target state is defined by the temperature of a heating target object or a heating medium, when temperature measured by the temperature sensor 32 reaches temperature defined as a target state, the control unit 135 causes the cook H to start cooking of the next cooking step.

For example, in the case in which the target state is defined by the weight of the heating target object, when weight measured by the weight sensor 33 reaches weight defined as a target state, the control unit 135 causes the cook H to start cooking of the next cooking step.

According to the control by the control unit 135, the information presentation unit 136 performs, based on the recipe data acquired by the recipe data acquisition unit 131, navigation for supporting the reproduction cooking by the cook H. For example, the information presentation unit 136 causes the display 21 to display a navigation screen including information indicating content of the cooking work and information indicating the target state. Various kinds of information for supporting the reproduction cooking are presented according to the cooking environment measured by the cooking environment measurement unit 132 and the sensor data acquired by the sensor data acquisition unit 133.

The recording processing unit 101, the recipe data creation unit 102, and the reproduction processing unit 103 are implemented as hardware by, for example, the processor 31.

Note that recording processing and reproduction processing of the cooking process may be performed in the same device (the cooking support system) or may be respectively performed in different devices. In the present disclosure, as an example, a case in which the recording processing and the reproduction processing of the cooking process are performed in the cooking support system 1 (FIG. 3), which is the same device, is explained.

### <Information included in recipe data>

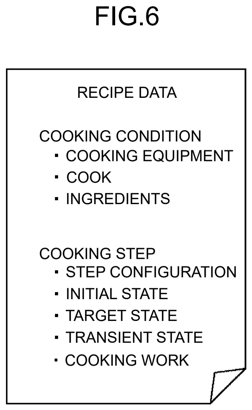

FIG. 6 is a diagram illustrating an example of information included in recipe data according to the first embodiment of the present disclosure.

In FIG. 6, the recipe data includes information concerning a "cooking condition" and information concerning a "cooking step" as information of large classification.

The "cooking condition" is a condition that does not change throughout the entire cooking process. Information of small classification constituting the information concerning the cooking conditions includes information concerning each of "cooking equipment", "cook", and "ingredient".

On the other hand, the "cooking step" is a state or work defined as a process of cooking. The information concerning the cooking step is represented as information on the time axis as appropriate. The information of the small classification constituting the information concerning the cooking step includes information concerning each of a "step configuration", an "initial state", a "target state", a "transient state", and a "cooking work".

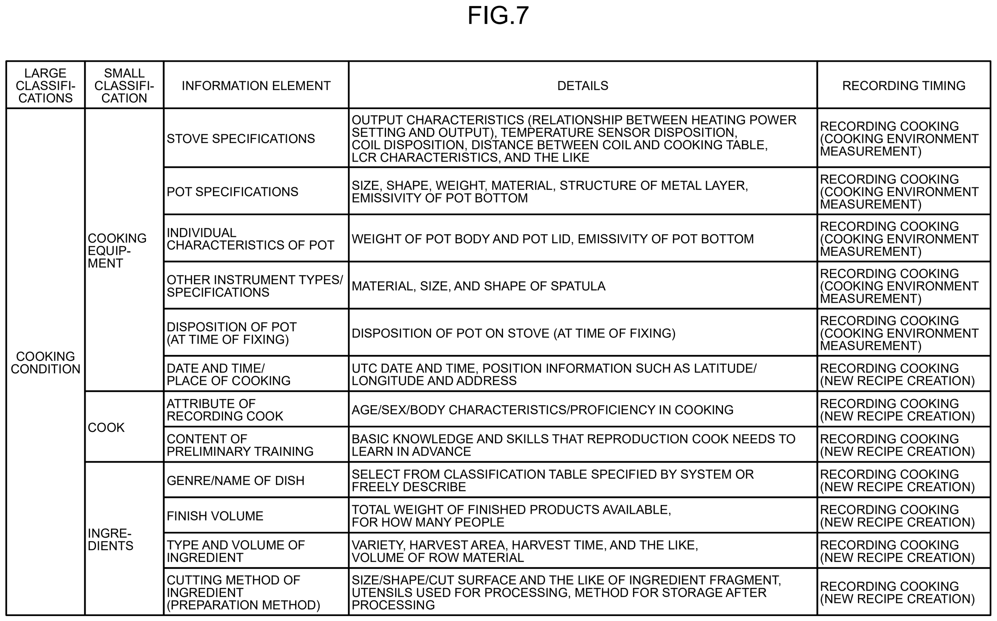

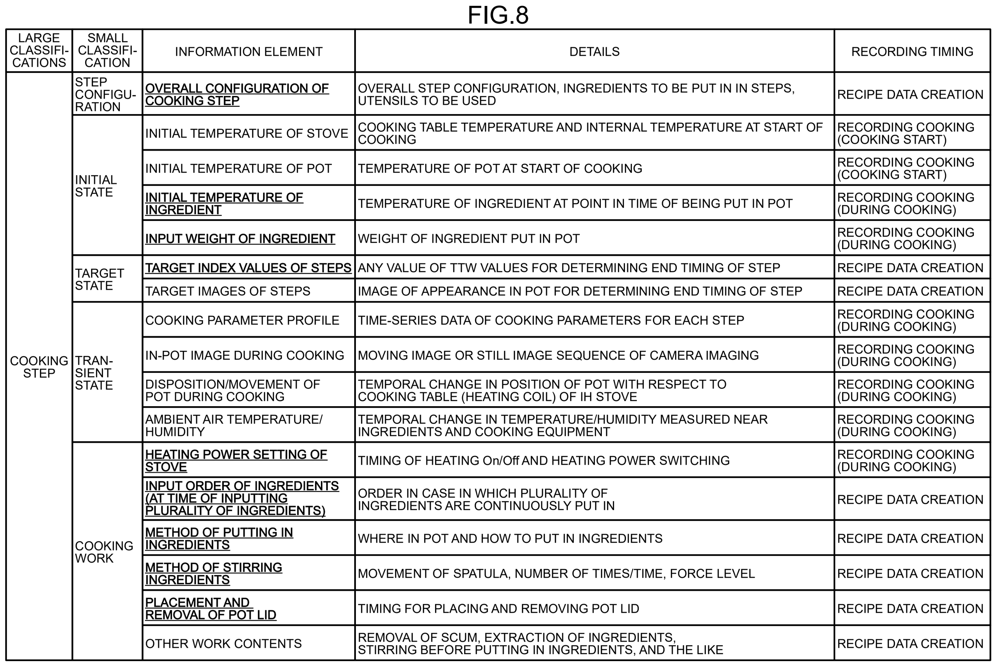

FIG. 7 is a diagram illustrating an example of information concerning cooking conditions according to the first embodiment of the present disclosure. FIG. 8 is a diagram illustrating an example of information concerning the cooking step according to the first embodiment of the present disclosure.

In FIG. 7, information concerning the "cooking equipment" in the information concerning the "cooking conditions" includes information concerning specifications of a stove, specifications of a pot, individual characteristics of the pot, types/specifications of other utensils, disposition of the pot (at a fixing time), and a date and time/a place of cooking. For example, the specifications of the stove represent the specifications of the IH stove 11 used for recording cooking.

The information concerning the "cook" includes information concerning an attribute of a recording cook and information concerning content of preliminary training.

The information concerning the "ingredient" includes information concerning a genre/a name of a dish, a finish volume, a type and a volume of an ingredient, and a way of cutting (a method of finishing) the ingredient.

In FIG. 8, the information concerning the "step configuration" in the information concerning the "cooking step" includes information concerning an overall configuration of the cooking step. The information concerning the "step configuration " represents, for example, the number and the order of cooking steps, ingredients to be put in the respective cooking steps, and cooking utensils to be used.

The information concerning the "initial state" includes information concerning an initial temperature of a stove, an initial temperature of a pot, an initial temperature of an ingredient, and weight of the ingredient to be put in.

The information concerning the "target state" includes information concerning target index values of the steps and target images of the steps. For example, the information concerning the target index values of the steps is information indicating any value of cooking parameters used for determining end timing of the cooking step.

The information concerning the "transient state" includes information concerning a cooking parameter profile, an in-pot image during cooking, disposition/movement of a pot during cooking, and ambient temperature/humidity.

The information concerning the "cooking work" includes information concerning heating power setting of a stove, the order of putting in ingredients (at the time when a plurality of ingredients are put in), a method of putting in the ingredients, a method of stirring the ingredients, placing and removing of a pot lid, and other work content.

Note that, in right end columns of FIG. 7 and FIG. 8, timings when respective information elements are recorded are illustrated.

The classifications illustrated in FIG. 7 and FIG. 8 are an example. As information of which classification a certain information element is recorded in recipe data can be optionally changed. Information elements other than the information illustrated in FIG. 7 and FIG. 8 may be included as the information concerning the cooking conditions or the information concerning the cooking steps.

### <Recording and use of information concerning cooking conditions and information concerning cooking steps>

The information elements illustrated in FIG. 7 and FIG. 8 are recorded in any format in any device such as the storage 34 accessible by the processor 31.

The recipe data acquisition unit 131 (FIG. 5) accesses a device in which recipe data is recorded and acquires data and performs appropriate information processing to thereby acquire the respective information elements. A URL relating to necessary data may be recorded in the storage 34 and the recipe data acquisition unit 131 may refer to the URL and access a database on the Web server 42 to thereby acquire the respective information elements.

### <Normal recipe creation>

The normal recipe is a recipe including content that can be understood by the cook H who performs the recording cooking. The normal recipe is created using any medium or expression form. For example, information concerning a type and a volume of an ingredient, a cooking utensil to be used, a cooking procedure, and the like is included as the content.

As the form and the content of the normal recipe, it is important that the cook H who performs the recording cooking can stably cook a target dish as intended. A person who creates the normal recipe and the cook H who performs the recording cooking may be the same person or may be different persons.

If the recording cooking can be stably executed, the normal recipe creation can be omitted. For example, when a target is a dish that the cook H is usually accustomed to making, since the cook himself or herself can stably perform the recording cooking, the normal recipe is unnecessary.

### <Recording cooking>

In recording cooking, information necessary for creating recipe data is acquired and recorded by a sensor device or the like. Information input by the cook H is sometimes recorded as the information necessary for the creation of the recipe data. The information necessary for the creation of the recipe data is acquired by communicating with related equipment as appropriate.

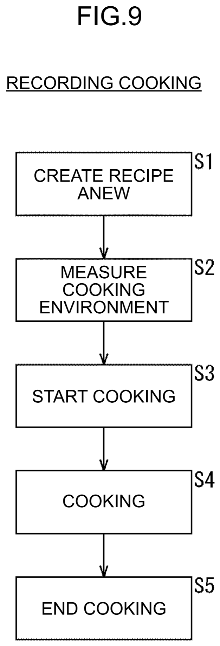

FIG. 9 is a diagram illustrating an example of a processing procedure of the recording cooking according to the first embodiment of the present disclosure.

In FIG. 9, in step S1, the information recording unit 114 (FIG. 4) of the recording processing unit 101 creates recipe data (a file) of a dish, which is a target of the recording cooking, anew. At the time of the new creation of the recipe data, the information recording unit 114 records some information elements of the information concerning the cooking condition based on, for example, input by the cook H. For example, the cook H inputs information concerning the cook himself or herself and information concerning ingredients using, for example, a screen displayed on the display 21.

As illustrated in FIG. 7, information elements of a time of new creation of a recipe, a date and time/a place when and where cooking was performed, an attribute of a recording cook, content of preliminary training, a genre and a name of a dish, a finish volume, a type and a volume of an ingredient, and a way of cutting the ingredient (a preparation method) are recorded.

Some information elements of the information concerning the cooking conditions may be recorded at any point in time before being used in the following processing. Since some information elements of the information concerning the cooking conditions are recorded at this any point in time, the cooking support system 1 can use the recorded information for navigation at the time of the recording cooking.

Subsequently, in step S2, the cooking environment measurement unit 111 measures a cooking environment and acquires information concerning specifications and characteristics of the cooking equipment. The cooking environment measurement unit 111 acquires, for example, information concerning specifications of the IH stove 11, a pot, which is the cooking utensil 12, and other equipment from a database prepared in the storage 34 or the Web server 42.

In the database of the storage 34 or the Web server 42, information concerning equipment such as an IH stove supported by the cooking support system 1 is provided by a manufacturer or the like and is managed in association with model number information and the like. For example, the cooking environment measurement unit 111 acquires the model number information of the equipment automatically or based on input of the cook H to a UI such as a screen displayed on the display 21 and acquires information concerning cooking equipment by referring to the database based on the acquired model number information.

Here, among the specifications of the pot, the weight of the pot lid is particularly important. The weight of the pot lid affects, for example, measurement accuracy of the weight of ingredients in the case in which the pot lid is placed and removed during cooking. Since an error occurs because of variations at the time of manufacturing or aged deterioration, a measurement value measured using the weight sensor 33 mounted on the IH stove 11 may be recorded as the weight of the pot. Considering that it is likely that a pot having characteristics different from the pot used at the time of the recording cooking is used at the time of the reproduction cooking, it is desirable to record the measurement value obtained by using a real pot as explained above.

When the temperature of the pot is measured in a non-contact manner using the temperature sensor 32, which is the radiation thermometer, the emissivity of a measured portion is also important. Since it is likely that the pot is deteriorated over time by deposits and the like on the pot surface, for the emissivity of the pot, it is desirable to record a measurement value measured using the real pot.

When a temperature sensor (a thermocouple) different from the radiation thermometer is provided in the cooking support system 1, it is possible to estimate emissivity by simultaneously measuring the temperature of the same object with different temperature sensors. The emissivity of the pot may be estimated by performing so-called calibration based on measurement results of a plurality of temperature sensors.

In the case of a recipe that does not require movement of the pot during cooking, the cooking environment measurement unit 111 determines, at this point in time, a position where the pot is fixed and acquires information concerning the determined position as information concerning disposition of the pot. In cooking in the cooking support system 1, by fixing the position of the pot, the reproducibility of the heating characteristic and the temperature measurement can be improved and the reproducibility of finish of a dish can also be improved compared with when the position of the pot is moved.

The information acquired by the cooking environment measurement unit 111 is recorded by the information recording unit 114 as an information element concerning cooking equipment. As illustrated in FIG. 7, at the time of measuring a cooking environment, information elements concerning the specifications of the stove, the specifications of the pot, the individual characteristics of the pot, the types/specifications of other utensils, and the disposition of the pot (at the time of fixing) are recorded.

Subsequently, in step S3, at the timing of the cooking start such as timing immediately before the heating start, the information recording unit 114 records an information element concerning an initial state of cooking equipment based on the information measured by the sensor data acquisition unit 112. As illustrated in FIG. 8, for example, information concerning initial temperature of each of the IH stove 11 and the pot is recorded.

Initial temperatures of the IH stove 11 and the pot are measured using the temperature sensor 32 mounted on the cooking support system 1 and are acquired by the sensor data acquisition unit 112. As the temperature of the IH stove 11, for example, the temperature of a portion of a cooking table in contact with the pot is recorded. When the temperature can be measured, the temperature inside the IH stove 11 is also recorded.

Not only the timing of the cooking start but also the temperatures of the IH stove 11 and the pot measured at any time during cooking may be recorded. Although the influence on the reproducibility of finish is smaller compared with an initial temperature of an ingredient, it is desirable to record information such as an initial temperature of a cooking utensil as explained above.

Subsequently, in step S4, during the cooking, the information recording unit 114 records, in time series, various information such as sensor data measured by a sensor mounted on the cooking support system 1 and acquired by the sensor data acquisition unit 112. As illustrated in FIG. 8, for example, information elements concerning an initial temperature of an ingredient, weight of the ingredient to be put in, a cooking parameter profile, an in-pot image during cooking, disposition/movement of a pot during cooking, an ambient temperature/humidity, and heating power setting of a stove are recorded.

Here, recording of main information is explained.

Information concerning heating power setting for the IH stove 11 is acquired and recorded as an information element concerning cooking work. In this case, the sensor data acquisition unit 112 detects and acquires a value of the heating power setting set by the cook H operating an operation panel or the like provided as a UI of the cooking support system 1.

A cooking parameter profile, which is time series data of time/temperature/weight, is generated by the sensor data acquisition unit 112 and recorded as an information element concerning a transient state. A time constituting the cooking parameter profile is measured by a real-time clock incorporated in the processor 31. As temperature constituting the cooking parameter profile, for example, the temperature of the bottom of the pot is measured by the temperature sensor 32 incorporated in the IH stove 11. As weight constituting the cooking parameter profile, for example, the weight of an ingredient in the pot is measured by the weight sensor 33 incorporated in the IH stove 11.

An in-pot image is acquired by the sensor data acquisition unit 112 and recorded as an information element concerning a transient state. For example, images reflecting a state in the pot, which are generated based on images captured by the camera 22, are recorded in time series.

Disposition/movement of the pot is acquired by the sensor data acquisition unit 112 and recorded as an information element concerning a transient state. The disposition/movement of the pot is acquired by image recognition targeting an in-pot image.

An initial temperature of the ingredient is acquired and recorded as an information element concerning an initial state. The initial temperature of the ingredient is the temperature of the ingredient at a point in time when the ingredient is put in (immediately before the ingredient is put in) the pot. For example, the temperature of the ingredient is measured by the cook H using a thermometer for cooking.

Weight of the ingredient to be put in is acquired and recorded as an information element concerning an initial state. For example, the weight of the ingredient actually put in the pot is measured by the weight sensor 33 rather than the weight in the normal recipe and is used for recording. It is difficult to measure the weight of the ingredient when the cook H puts in the ingredient while holding the pot by hand and stirring the ingredient. In this case, weight measured by the cook H using a weighing scale may be recorded.

In step S4, the recording of the information elements explained above is repeatedly performed during the cooking.

Then, in step S5, when the cooking ends, the information recording unit 114 records time when the cooking ended and stops the recording of the sensor data. The data in which the kinds of information are recorded as explained above is supplied to the recipe data creation unit 102 as recording data.

### <Recipe data creation>

In the recipe data creation, recipe data necessary for the reproduction cooking is created based on the recording data generated by the recording cooking. Note that processing order of the recording cooking and the recipe data creation does not matter. The recording cooking and the recipe data creation are sometimes repeatedly performed one after the other.

The information element recorded in the recording cooking is also updated at the time of recipe data creation according to necessity.

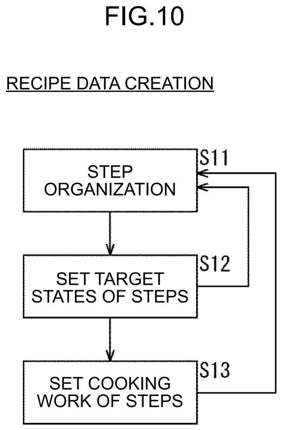

FIG. 10 is a diagram illustrating an example of a processing procedure of recipe data creation according to the first embodiment of the present disclosure.

In FIG. 10, step organization in step S11 is work of dividing the entire cooking process into a plurality of cooking steps. The step organization unit 121 of the recipe data creation unit 102 divides the entire cooking process from the start to the end of the recording cooking into a plurality of sections based on, for example, input by the cook H and sets each of the sections as a section constituting one cooking step.

The step organization of the recipe data defines, throughout the cooking process, what kind of cooking work is to be performed in the next cooking step when what kind of target state is reached. In the step organization, a point of performing work in which timing is important, such as a change in heating power and input of ingredients, and a point in which state determination such as weight and temperature is important are set as boundaries of the respective cooking steps.

The information concerning the cooking steps set by the step organization unit 121 is recorded by the information recording unit 124 as the information elements of the step configuration as explained above, whereby the information elements of the entire configuration of the cooking steps are recorded as illustrated in FIG. 8.

Subsequently, in step S12, the target state setting unit 122 sets the target states of the respective cooking steps using a quantitative index value that can be measured by the cooking support system 1. For example, the target state setting unit 122 sets at least one numerical value among a time (an elapsed time from the start of the cooking steps), temperature (the temperature of the pot bottom detected by the temperature sensor 32), and weight (the weight of the ingredient in the pot measured by the weight sensor 33) as an index value that defines a target state.

Usually, a measurement value at end timing of the steps of the recording cooking is used as an index value defining a target state. This measurement value is sometimes corrected considering an error or the like at the time of the recording cooking.

It is also possible to set an in-pot image captured by the camera 22 as target states of images (appearances) of the cooking steps. An image that does not need to be an image at end timing of a certain cooking step at the time of the recording cooking and is appropriate as a target state of an appearance from the viewpoint of reproducing finish is selected by, for example, the cook H and is set by the target state setting unit 122 as an indicator defining the target state. The image used as the indicator for defining the target state may be a still image selected from in-pot images or may be a moving image. An image edited for easy understanding of a characteristic of attention may be used. A captured image at the time of the recording cooking does not always need to be used. Means for generating a target image is optional, including an illustration, CG (Computer Graphics) synthesis, and the like.

Information concerning an index value defining the target state set by the target state setting unit 122 is recorded by the information recording unit 124 as an information element of the target state, whereby target index values of the steps and information elements of target images of the steps are recorded as illustrated in FIG. 8.

Subsequently, in step S13, the cooking work setting unit 123 sets, based on, for example, input by the cook H, content of the cooking work performed in the cooking steps. Information indicating the content of the cooking work set by the cooking work setting unit 123 is recorded by the information recording unit 124 as information elements of information concerning the cooking work. As illustrated in FIG. 8, respective information elements concerning the order of putting in ingredients, a method of putting in the ingredients, a method of stirring the ingredients, a method of placing and removing the pot lid, and other work content are recorded.

Here, content of respective kinds of work is converted into data such that work performed by the cook H at the time of the recording cooking can be faithfully reproduced. For input and stirring of ingredients, in order to prevent occurrence of a person-dependent difference, a sentence serving as an explanation of content of specific work is recorded. A sentence input by the cook H may be recorded or a sentence obtained by inputting a video reflecting a state of work to an inference model may be recorded. In the latter case, an inference model to which a video reflecting a state of work of the cook H is input and from which a sentence indicating content of the work is output is prepared in the cooking work setting unit 123.

Recipe data is created by information concerning a target state and content of cooking work for the respective cooking steps set in the step organization being recorded (step S11). In some cases, the step organization is performed again after a target state is set or, in other cases, the step organization is performed again after the cooking work is set.

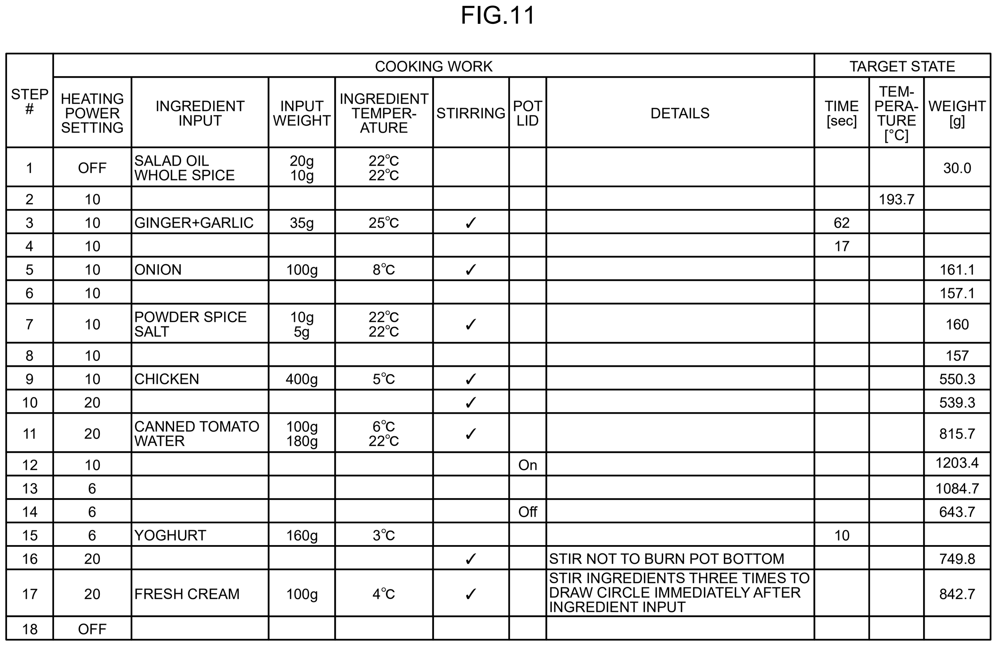

FIG. 11 is a diagram illustrating an example of information concerning cooking steps included in recipe data according to the first embodiment of the present disclosure.

In the example illustrated in FIG. 11, the entire cooking process is divided into eighteen cooking steps of cooking steps #1 to #18 and cooking work and target states for the respective cooking steps are illustrated. Contents of the cooking work and the target states illustrated in FIG. 11 are the contents of the underlined information elements (the overall configuration of the cooking step, the initial temperature of the ingredient, weight of the ingredient to be put in, the target index value of the steps, the heating power setting of the stove, the input order of the ingredients (at the time when a plurality of ingredients are put in), the method of putting in the ingredient, the method of stirring of the ingredient, and the placement and removal of the pot lid) in FIG. 8.

For example, the entire cooking process being constituted by the eighteen cooking steps is represented by information elements of the entire configuration of the cooking steps. The target states of the respective cooking steps is represented by information elements of the target index values of the steps.

The heating power setting, the ingredient input, the input weight, the ingredient temperature, the stirring, and the pot lid that define the content of the cooking work are respectively represented by information elements of the heating power setting of the stove, the input order of the ingredients and the method of putting in the ingredient, the weight of the ingredient to be input, the initial temperature of the ingredient, the method of stirring the ingredient, and the placement and removal of the pot lid.

The following items are designated as the cooking work of the cooking steps.
· Heating power setting: Set the heating power of the IH stove 11 to a designated level.
· Ingredient input: Put in designated ingredients in designated order.
· Input weight: designate weight of an ingredient to be input in the pot.
· Ingredient temperature: Designate temperature (initial temperature) of the ingredient at a point in time of input.
· Stirring: Stir the ingredient in the pot (after the ingredient is put in if being put in).
· Pot lid: On indicates that the pot lid is placed and Off indicates that the pot lid is removed.
· Details: Designate detailed work such as a way of stirring.

When there is no instruction as a detailed item, the kinds of work designated by the items of the heating power setting, the ingredient input, and the pot lid represents that the work are kinds of work executed by the cook H at the start time of the cooking step. The work designated by the item of the stirring represents that the work is work continuously executed by the cook H during the cooking step.

A process not designated in the cooking work represents that the step is a cooking step automatically executed by the cooking support system 1. The step not designated in the cooking work means that the cook simply waits until the target state is reached.

As the index value defining the target state, at least one of a time, temperature, and weight is set for each cooking step. The target state means that the next cooking step is started when a measurement value by the cooking support system 1 reaches each target value.

For example, a cooking step #1 is a step in which, as cooking work of the cook H, turning off the heating power of the IH stove 11 and putting 20 g of salad oil and 10 g of hole spices each having temperature of 22°C in the pot is set.

At the time of the reproduction cooking, it is determined that the target state has been reached at timing when the weight of the put-in ingredients (the salad oil and the whole spices) reaches 30.0 g and the control unit 135 (FIG. 5) performs processing as the end of the cooking step #1. For example, when the weight of the ingredients measured by the weight sensor 33 reaches 30.0 g, the information presentation unit 136 of the reproduction processing unit 103 presents to the cook H that the target state has been reached.

A cooking step #2 is a step in which there is no instruction of cooking work by the cook H.

At the time of the reproduction cooking, the control unit 135 of the reproduction processing unit 103 controls the IH stove 11 such that the heating power reaches 10. It is determined that the target state has been reached at timing when the temperature of the pot reaches 193.7°C and the control unit 135 performs processing as the end of the cooking step #2. For example, when the temperature of the pot measured by the temperature sensor 32 reaches 193.7°C, the information presentation unit 136 presents to the cook H that the target state has been reached.

A cooking step #3 is a step in which, as cooking work of the cook H, ginger and garlic at 25°C are put in the pot by 35 g and stirred.

At the time of the reproduction cooking, it is determined that the target state has been reached at timing when an elapsed time from the start of the cooking step #3 reaches 62 seconds and the control unit 135 performs processing as the end of the cooking step #3.

For cooking steps #4 to #18, cooking work and target states are defined in the same manner.

By the recipe data creation, recipe data including such information is created. The created recipe data is stored in, for example, the storage 34 in the cooking support system 1 by the recipe data management unit 125. When recipe data is stored on the Web server 42, the created recipe data is transmitted to the Web server 42 by the recipe data management unit 125.

### <Reproduction cooking>

In the reproduction cooking, respective cooking steps are reproduced based on recipe data. A flow of processing of the reproduction cooking is the same flow as the flow of the processing of the recording cooking. The reproduction cooking is performed such that the cooking support system 1 supports cooking based on content of recipe data to reproduce, as finish of the reproduction sample, the same finish as the finish of the recording sample finished at the time of the recording cooking. Note that, in the reproduction cooking as well, data recording for the recipe data is performed in the same manner as at the time of the recording cooking according to necessity.

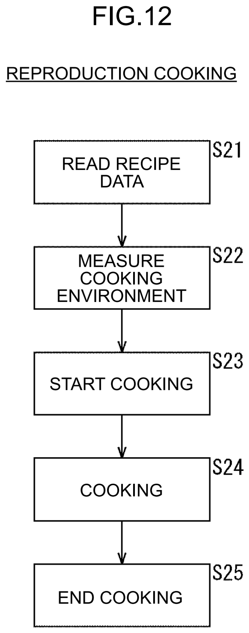

FIG. 12 is a diagram illustrating an example of a processing procedure of the reproduction cooking according to the first embodiment of the present disclosure.

In FIG. 12, in step S21, when the cook H designates a reproduction target dish, the recipe data acquisition unit 131 (FIG. 5) of the reproduction processing unit 103 reads recipe data. The designation of the reproduction target dish is performed by the information presentation unit 136 using, for example, a screen displayed on the display 21.

The information presentation unit 136 causes the display 21 to mainly display content of cooking conditions in information of the recipe data read by the recipe data acquisition unit 131. The cook H can check the content displayed on the display 21 and check whether the cooking conditions important for executing the reproduction cooking coincide with conditions of an environment of the reproduction cooking.

The cook H checks the content of the cooking conditions and procures ingredients as designated by the recipe data. The cook H performs preparation of the ingredients as designated by the recipe data and prepares the ingredients to be in the same state as an initial state at the time of the recording cooking. Information concerning ingredients to be procured and information concerning a way of preparing ingredients are presented to the cook H using, for example, a screen of the display 21. Information concerning the ingredients used for the preparation and the like explained above is included in the information concerning the cooking conditions of the recipe data (FIG. 7).

Subsequently, in step S22, the cooking environment measurement unit 132 measures a cooking environment and acquires the specifications and characteristics of cooking equipment used in the reproduction cooking. The measurement of the cooking environment at the time of the reproduction cooking is performed in the same manner as the measurement of the cooking environment in the recording cooking (step S2 in FIG. 9).

When there is a difference between the cooking environment of the reproduction cooking acquired by the cooking environment measurement unit 132 and the cooking environment of the recording cooking represented by the information included in the recipe data, the information presentation unit 136 presents information indicating that there is the difference to the cook H to warn the cook H. The cook H can bring the cooking environment of the reproduction cooking closer to the cooking environment of the recording cooking by changing cooking equipment according to a difference in a cooking environment presented using, for example, the screen of the display 21.

Subsequently, in step S23, the sensor data acquisition unit 133 measures the temperatures of the IH stove 11 and the pot as an initial state of the cooking equipment and the like in the same manner as at the cooking start time in the recording cooking (step S3 in FIG. 9). When the measured temperature is largely different from the temperature in the initial state recorded in the recipe data, the information presentation unit 136 suspends a heating start and warns the cook H.

For example, when the temperatures of the IH stove 11 and the pot are different from the temperature in the initial state recorded in the recipe data by a threshold or larger, information indicating that the temperatures are different is displayed on the display 21. By adjusting the temperatures of the IH stove 11 and the pot in response to the warning, the cook H can prevent a decrease in reproducibility due to mismatch of the temperature in the initial state.

Subsequently, during cooking in step S24, the control unit 135 refers to content of information concerning the cooking step included in the recipe data and supports reproduction of the cooking step. That is, in order to reproduce the same step as the cooking step (a time series of a cooking parameter profile) described in the recipe data, the control unit 135 measures a state of the reproduction cooking in real time with a sensor. The information presentation unit 136 presents information for supporting work of the cook H.

As explained above, as an information element of the recipe data, the information concerning the transient state of the cooking step is included. The cooking parameter profile is visualized based on the information concerning the transient state and presented to the cook H.

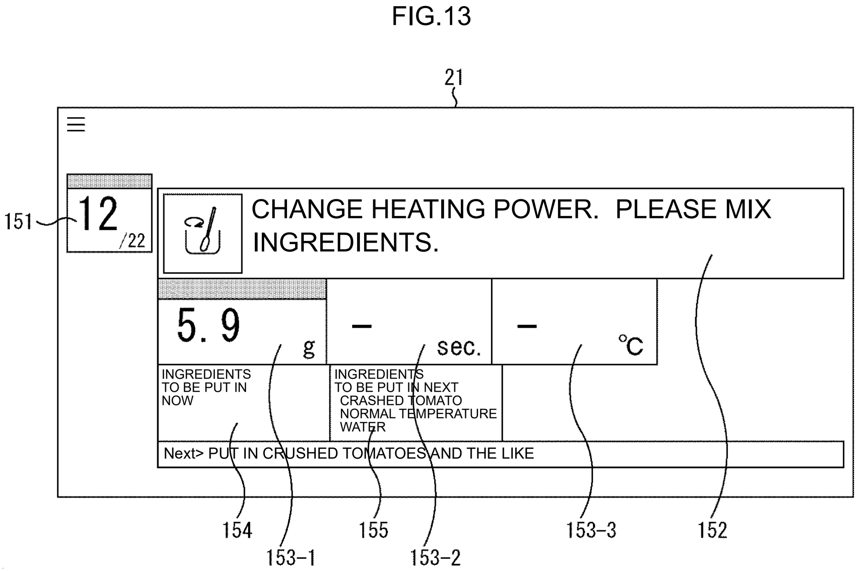

FIG. 13 is a diagram illustrating a display example of a navigation screen according to the first embodiment of the present disclosure.

In a region 151, which is a small rectangular region at the upper left of the navigation screen illustrated in FIG. 13, a number indicating that a cooking step being executed is a twelfth cooking step among twenty-two cooking steps is displayed. In a laterally long region 152 on the right side of the region 151, sentences indicating content of cooking work are displayed. From the sentences displayed in the region 152, the cook H can confirm that the cook H only has to perform work of mixing ingredients as work of the twelfth cooking step.

Regions 153-1, 153-2, and 153-3 are formed below the region 152. The regions 153-1, 153-2, and 153-3 are respectively display regions of weight, time, and temperature set as index values defining a target state.

In the example illustrated in FIG. 13, a difference weight between weight set as an index value defining the target state and current weight being 5.9 g is displayed in the region 153-1. The difference weight decreases with the elapse of time because of moisture evaporation involved in heating. The cook H mixes the ingredients until the displayed difference weight reaches 0 g. When the difference weight reaches 0 g, it is determined that the target state has been reached and a thirteenth cooking step is started.

When work of the cooking step being executed is work of putting in an ingredient, information concerning the ingredient is displayed in a region 154 at the lower part of the screen. In a region 155 on the right side of the region 154, information indicating that ingredients to be put in in the thirteenth cooking step are crushed tomato and normal temperature water is displayed.

By checking the navigation screen explained above, the cook H can easily proceed with the respective cooking steps of the reproduction cooking.

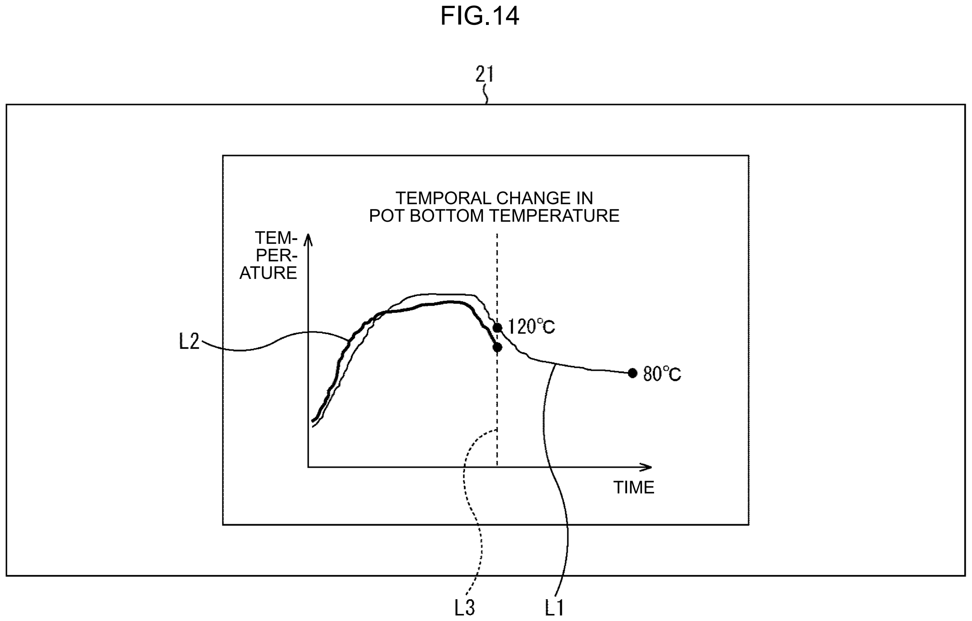

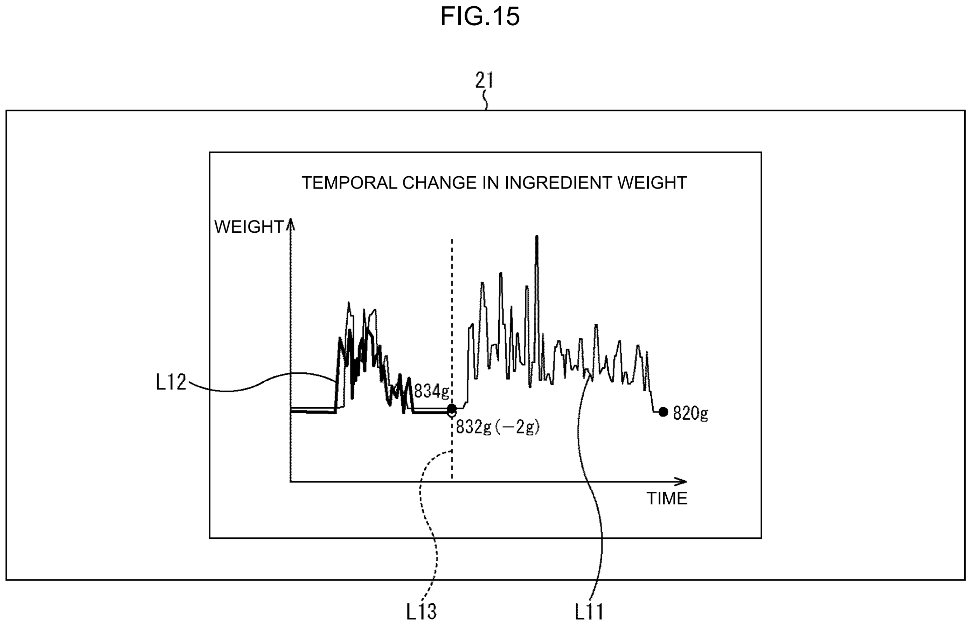

FIG. 14 and FIG. 15 are diagrams illustrating other display examples of the navigation screen according to the first embodiment of the present disclosure.

The navigation screens illustrated in FIG. 14 and FIG. 15 are screens illustrating cooking parameter profiles in a visualized manner. When predetermined operation is performed in the state illustrated in FIG. 13 in which the information concerning the cooking step being executed is displayed, the display of the navigation screen is switched to a screen illustrating the cooking parameter profile in a visualized manner.

In the example illustrated in FIG. 14, a temporal change in a pot bottom temperature in a certain cooking step is visualized and displayed. The screen illustrated in FIG. 14 is displayed, for example, when a target state is defined by temperature. In a graph illustrated in FIG. 14, the vertical axis indicates temperature and the horizontal axis indicates time.

In FIG. 14, a temperature change indicated by a solid line L1 indicates a temperature change serving as a reference of a cooking step being executed. Temperature serving as a reference is measured in the recording cooking and is displayed based on time-series data of temperature constituting a cooking parameter profile recorded in recipe data. The temperature in the target state is 80°C.

On the other hand, a temperature change indicated by a solid line L2 indicates a temperature change measured in the cooking step being executed. The temperature change is displayed based on temperature measured by the temperature sensor 32 from the start of the cooking step to the present time. A broken line L3 represents the present time.

The cook H can confirm the reproducibility of the temperature change in the cooking step by comparing the temperature change serving as the reference and a change in an actual measurement value.

In the example illustrated in FIG. 15, a temporal change in an ingredient weight in a certain cooking step is visualized and displayed. The screen illustrated in FIG. 15 is displayed, for example, when the target state is defined by weight. In a graph illustrated in FIG. 15, the vertical axis indicates weight and the horizontal axis indicates time.

In FIG. 15, a weight change indicated by a solid line L11 indicates a weight change serving as a reference of the cooking step being executed. Weight serving as a reference is measured in the recording cooking and is displayed based on time-series data of weight constituting the cooking parameter profile recorded in the recipe data. The weight in the target state is 820 g.

On the other hand, a weight change indicated by a solid line L12 indicates a weight change measured in the cooking step being executed. The weight change is displayed based on weight measured by the weight sensor 33 from the start of the cooking step to the present time. A broken line L13 indicates the present time.

The cook H can confirm the reproducibility of the weight change in the cooking step by comparing the weight change serving as the reference and a change in an actual measurement value.

The navigation screen explained above is displayed on the display 21 by the information presentation unit 136 as information for supporting work of the cook H.

As explained above, a value that can be measured in the cooking support system 1 is set for each of the cooking steps as the index value defining the target state and is recorded as the information of the recipe data, whereby high reproducibility can be stably implemented regardless of who performs the reproduction cooking.

Then, when all the cooking steps end in step S25, the reproduction cooking ends and a reproduction sample is finished. The information presentation unit 136 visualizes the difference between the sensor data such as the cooking parameter profile acquired in the process of the reproduction cooking and the sensor data recorded in the recipe data and displays the difference on the display 21 to thereby present a reproduction degree of the cooking process to the cook H based on the sensor data.

By recording all the sensor data acquired in the process of the reproduction cooking, it is possible to use the sensor data for an ex-post analysis.

### <Reproducibility evaluation>

The cook H evaluates the reproducibility of a completed dish using a sensory evaluation method and a measuring instrument.

With a series of processing explained above, the cook H can stably make a dish having high reproducibility of finish. Since information concerning cooking work in the respective cooking steps and the like are displayed on the navigation screen, the cook can easily proceed with the reproduction cooking.

The first embodiment is explained above.

### [Second Embodiment]

### <Processing procedure in a reproduction processing unit>

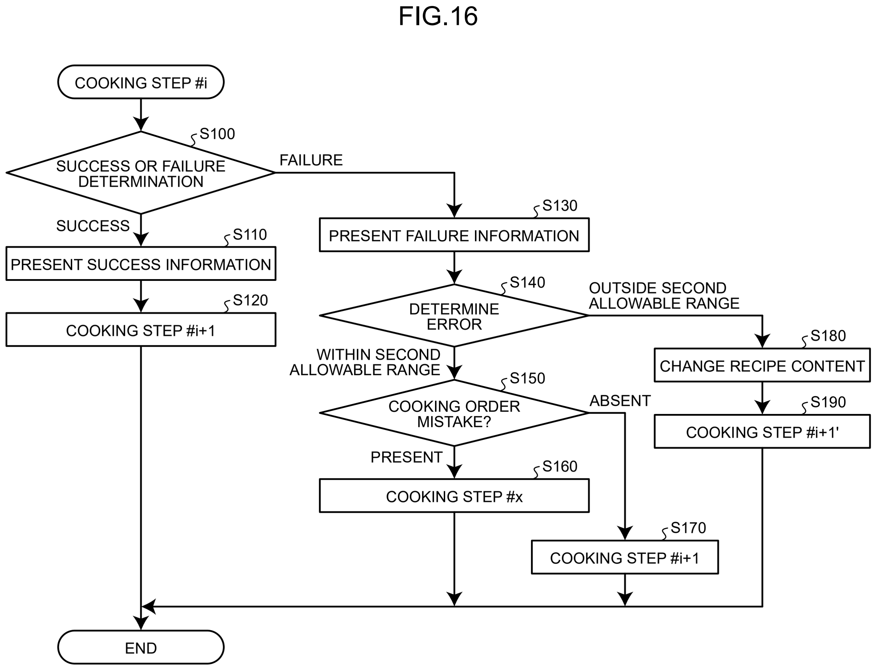

FIG. 16 is a diagram illustrating an example of a processing procedure in a reproduction processing unit according to a second embodiment of the present disclosure. The processing procedure illustrated in FIG. 16 is executed in the reproduction cooking explained above.

In FIG. 16, when a cooking step #i is carried out, in step S100, the control unit 135 compares a cooking state in the cooking step #i set as a target and a target state included in recipe data to thereby perform success or failure determination for cooking work in the cooking step #i.

For example, when the target state is defined by an elapsed time from start time of a cooking step among cooking parameters, the control unit 135 performs the success or failure determination for the cooking work based on whether an error between an elapsed time from start time of the cooking step #i and the target state of the elapsed time (hereinafter sometimes referred to as "time error") is within an allowable range. Furthermore, for example, in a case in which the target state is defined by the temperature of the object to be heated or the heating medium among the cooking parameters, the control unit 135 performs success or failure determination for the cooking work based on whether an error between the temperature measured by the temperature sensor 32 and the target state of the temperature (hereinafter, sometimes referred to as "temperature error ") is within an allowable range. For example, when the target state is defined by the weight of a heating target object among the cooking parameters, the control unit 135 performs the success or failure determination for the cooking work based on whether an error between weight measured by the weight sensor 33 and the target state of the weight (hereinafter sometimes referred to as "weight error") is within an allowable range.

The control unit 135 performs the success or failure determination for the cooking work based on whether execution order of the cooking step by the cook H coincides with the order of a plurality of cooking steps indicated in the recipe data (that is, presence or absence of a cooking order mistake).

Then, for example, when all of the time error, the temperature error, and the weight error are within the allowable ranges and the execution order of the cooking steps by the cook H coincides with the order of the plurality of cooking steps indicated in the recipe data (that is, when there is no cooking order mistake), the control unit 135 determines that the cooking work has been successful. On the other hand, when at least one of the time error, the temperature error, and the weight error is not within the allowable range or the execution order of the cooking steps by the cook H is different from the order of the plurality of cooking processes indicated in the recipe data (that is, when there is a cooking order mistake), the control unit 135 determines that the cooking work has been unsuccessful. The control unit 135 outputs a signal indicating a result of the success or failure determination for the cooking work to the information presentation unit 136. When it is determined that the cooking work has been successful, the processing proceeds to step S110 and, when it is determined that the cooking work has been unsuccessful, the processing proceeds to step S130. Hereinafter, the time error, the temperature error, and the weight error are sometimes collectively referred to as "cooking parameter error".

In step S110, the information presentation unit 136 presents information indicating that the cooking work has been successful (hereinafter sometimes referred to as "success information").

Subsequently, in step S120, the control unit 135 advances the cooking step to a cooking step #i+1, which is the next cooking step. After the processing in step S120, the processing procedure illustrated in FIG. 16 is started again with a target cooking step of the success or failure determination set as the cooking step #i+1.

On the other hand, in step S130, the information presentation unit 136 presents information indicating that the cooking work has been unsuccessful (hereinafter sometimes referred to as "failure information").

Subsequently, in step S140, the control unit 135 determines the magnitude of the cooking parameter error. Here, the allowable range of the cooking parameter error includes two-stage allowable ranges of a first allowable range and a second allowable range having a range larger than the first allowable range. In step S140, the control unit 135 compares the cooking parameter error and the first allowable range and, when the cooking parameter error is within the first allowable range, determines that the cooking work has been successful and, when the cooking parameter error is not within the first allowable range, determines that the cooking work has been unsuccessful. On the other hand, in step S140, the control unit 135 compares the cooking parameter error and the second allowable range. Then, when the cooking parameter error is within the second allowable range, the processing proceeds to step S150 and, when the cooking parameter error is not within the second allowable range, the processing proceeds to step S180.

In step S150, the control unit 135 checks a determination result of the presence or absence of the cooking order mistake (step S100). When there is a cooking order mistake, the processing proceeds to step S160 and, when there is no cooking order mistake, the processing proceeds to step S170.

In step S160, the control unit 135 changes, from the recipe data, a cooking step next to the cooking step #i, which is the target of the success or failure determination for the cooking work, and advances the cooking step to a cooking step #x, which is the next cooking step after the change. After the processing in step S160, the processing procedure illustrated in FIG. 16 is started again with the target step of the success or failure determination set as the cooking step #x.

In step S170, the control unit 135 advances the cooking step to a cooking step #i+1, which is the next cooking step. After the processing in step S170, the processing procedure illustrated in FIG. 16 is started again with the target cooking process of the success or failure determination set as the cooking step #i+1.

On the other hand, in step S180, the control unit 135 changes, from the recipe data, content of the cooking step #i set as the target of the success or failure determination and content of the cooking step #i+1, which is the cooking step next to the cooking step #i. In FIG. 16, the cooking step #i+1 after the content change is described as "cooking step #i+1'".

Subsequently, in step S190, the control unit 135 advances the cooking step to the cooking step #i+1', which is the next cooking step. After the processing in step S190, the processing procedure illustrated in FIG. 16 is started again with the target cooking step of the success or failure determination set as the cooking step #i+1'.

Note that in step S100, the control unit 135 may determine the success or failure of the cooking work from the cooking parameters in the cooking steps using a learned model for success or failure determination obtained by learning, with machine learning, the success or failure of the cooking work with respect to the target state. In step S140, the control unit 135 may determine allowability of the cooking work from the cooking parameters in the cooking steps using a learned model for allowability determination obtained by learning, with machine learning, allowability of the cooking work with respect to the target state.

### <Information concerning cooking steps included in recipe data>

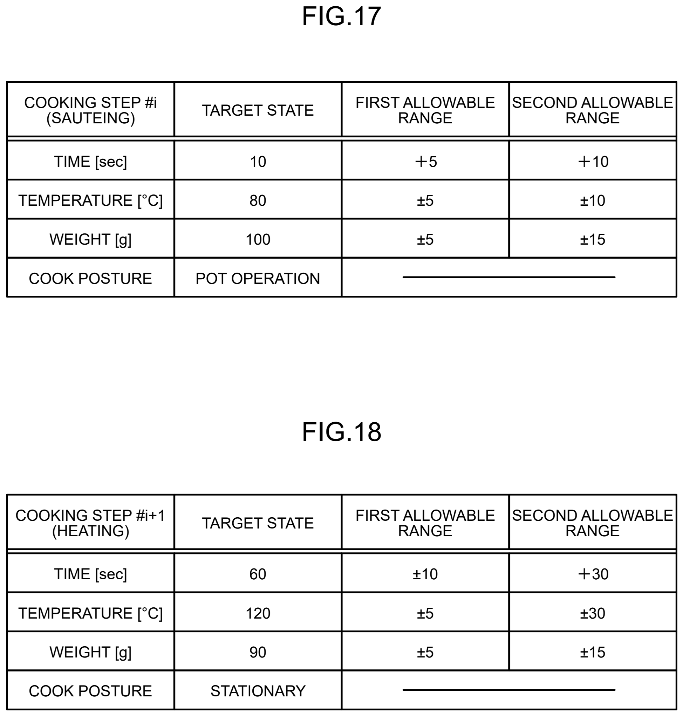

FIG. 17 and FIG. 18 are diagrams illustrating an example of information concerning cooking steps included in recipe data according to the second embodiment of the present disclosure. As an example, FIG. 17 illustrates information concerning the cooking step #i, which is a cooking step of "sauteing" and FIG. 18 illustrates information concerning the cooking step #i+1, which is a cooking step of "heating". As illustrated in FIG. 17 and FIG. 18, the information concerning the cooking step according to the second embodiment includes, in addition to the information concerning the cooking steps illustrated in FIG. 11, a first allowance range and a second allowance range for cooking parameters and also includes a target state for a posture of the cook H (hereinafter sometimes referred to as "target posture"). The target posture is classified into, for example, three postures of "stationary", "ingredient input", and "pot operation". For each of the cooking steps, the control unit 135 recognizes a posture of the cook H (hereinafter sometimes referred to as "cook posture") using an image of a hand of the cook H (hereinafter sometimes referred to as "camera image") captured by the camera 22, when the recognized cook posture (hereinafter sometimes referred to as "recognized posture") corresponds to the target posture, determines that there is no cooking order mistake, and, when the recognized posture does not correspond to the target posture, determines that there is a cooking order mistake.

Thus, for example, in the cooking step #i, when determining that the time error is "+ 5 seconds", which is the first allowable range, or smaller, the temperature error is "± 5°C", which is the first allowable range, or smaller, the weight error is "± 5 g", which is the first allowable range, or smaller, and the cook posture corresponds to "pot operation", which is the target posture, and there is no cooking order mistake, the control unit 135 determines that the cooking work of "sauteing" in the cooking step #i has been successful (step S100). On the other hand, in the cooking step #i, when determining that the time error is larger than "+ 5 seconds", which is the first allowable range, the temperature error is larger than "±5°C", which is the first allowable range, the weight error is larger than "±5 g", which is the first allowable range, or the cook posture does not correspond to "pot operation", which is the target posture, and there is a cooking order mistake, the control unit 135 determines that the cooking work of "sauteing" in the cooking step #i has been unsuccessful (step S100).

For example, in the cooking step #i+1, when determining that the time error is "± 10 seconds", which is the first allowable range, or smaller, the temperature error is "±5°C", which is the first allowable range, or smaller, the weight error is "±5 g", which is the first allowable range, or smaller, and the cook posture corresponds to the target posture "stationary", and there is no cooking order mistake, the control unit 135 determines that the cooking work of "heating" in the cooking step #i+1 is successful (step S100). On the other hand, in the cooking step #i+1, when determining that the time error is larger than "± 10 seconds", which is the first allowable range, the temperature error is larger than " ±5°C", which is the first allowable range, the weight error is larger than "±5 g", which is the first allowable range, or the cook posture does not correspond to the target posture "stationary", and there is a cooking order mistake, the control unit 135 determines that the cooking work of "heating" in the cooking step #i+1 has been unsuccessful (step S100).

### <Success information and failure information>

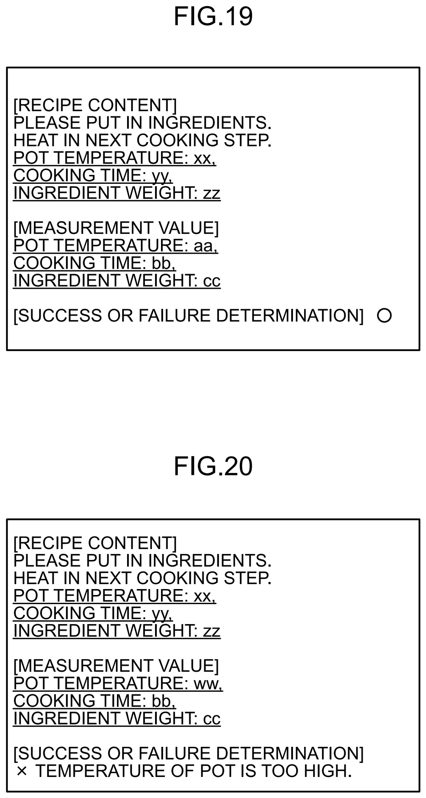

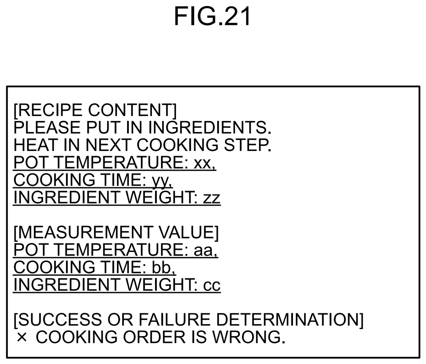

FIG. 19 is a diagram illustrating an example of success information according to the second embodiment of the present disclosure. FIG. 20 and FIG. 21 are diagrams illustrating examples of failure information according to the second embodiment of the present disclosure.

When the control unit 135 determines that cooking work has been successful, the information presentation unit 136 presents, for example, the success information illustrated in FIG. 19 (step S110). As illustrated in FIG. 19, in the success information, a mark "o" is added to the item of [success or failure determination], whereby it is indicated that the cooking work has been successful.

On the other hand, when the control unit 135 determines that the cooking work has been unsuccessful, the information presentation unit 136 presents, for example, the failure information illustrated in FIG. 20 or FIG. 21 (step S130). FIG. 20 is an example of failure information at the time when the temperature error is larger than the upper limit of the first allowable range and FIG. 21 is an example of failure information at the time when there is a cooking order mistake. As illustrated in FIG. 20 and FIG. 21, in the failure information, a mark "×" is added to the item of [success or failure determination], whereby it is indicated that the cooking work has been unsuccessful. The item of [success or failure determination] of the failure information illustrated in FIG. 20 indicates that the temperature error is larger than the upper limit of the first allowable range and the item of [success or failure determination] of the failure information illustrated in FIG. 21 indicates that there is a cooking order mistake.

### <Change in the order of the cooking steps>

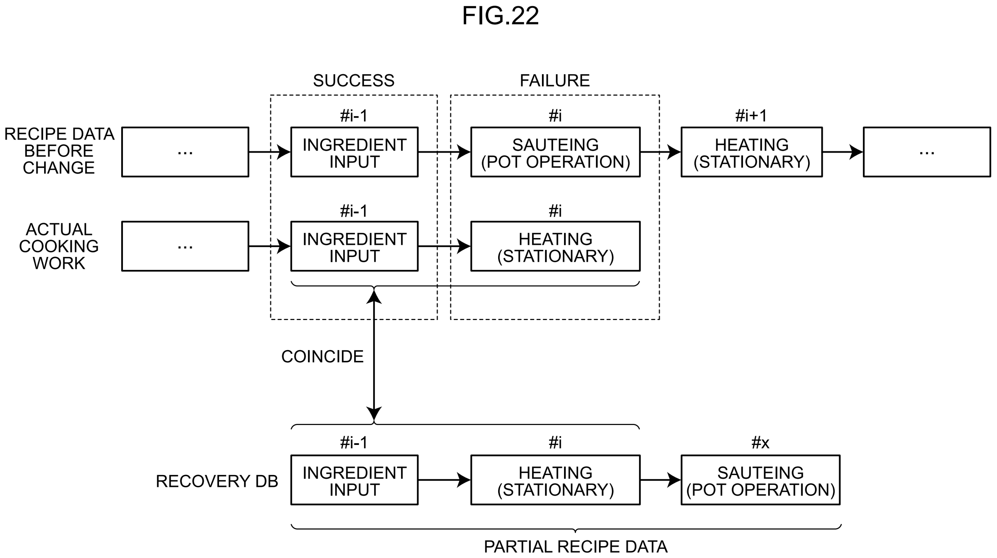

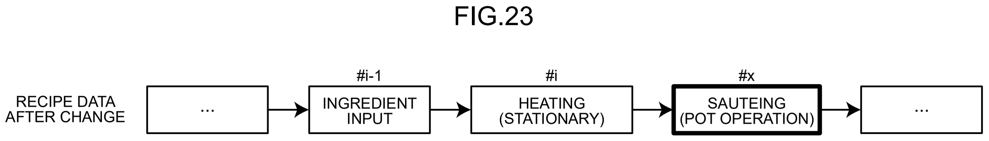

FIG. 22 and FIG. 23 are diagrams illustrating operation examples of a change in the order of cooking steps according to the second embodiment of the present disclosure.

As illustrated in FIG. 22, in recipe data before a change, when, whereas cooking work in the cooking step #i, which is a target of the success or failure determination of cooking work is "sauteing" and cooking work in the cooking step #i-1 immediately before the cooking step #i is "ingredient input", cooking work actually executed by the cook H in the cooking step #i is "heating " and cooking work actually executed by the cook H in the cooking step #i-1 is" ingredient input", the control unit 135 determines that the cooking work has been unsuccessful because there is a cooking order mistake (step S150 to step S160). When it is determined that, whereas the target posture of "sauteing" is "pot operation", the recognized posture at the time of "heating", which is the actual work performed in the cooking step #i, is "stationary", the control unit 135 determines that the cooking work has been unsuccessful because of a cooking order mistake. Hereinafter, the cooking work actually executed by the cook H is sometimes referred to as "actual cooking work".

Thus, the control unit 135 searches through a recovery DB with a set of "heating (stationary)" that is the cooking step #i in which the failure in the actual cooking work has occurred and "ingredient input" that is the cooking step #i-1 immediately before the cooking step #i and is the cooking step #i-1 in which the cooking work has been successful. The recovery DB is prepared in, for example, the Web server 42. A large number of pieces of recipe data (hereinafter sometimes referred to as "partial recipe data") of continuous partial cooking steps among the cooking steps of the entire recipe are registered in the recovery DB in advance. For example, in the partial recipe data illustrated in FIG. 22, it is defined that some of the cooking steps are "ingredient input to heating (stationary) to sauteing (pot operation) ".

In the search through the recovery DB, as illustrated in FIG. 22, the cooking order in the set of "ingredient input" in the cooking step #i-1 in the actual cooking work and "heating (stationary)" in the cooking step #i in the actual cooking work coincides with a part of the cooking order in the partial recipe data defined as being "ingredient input to heating (stationary) to sauteing (pot operation)". Thus, the control unit 135 acquires the partial recipe data illustrated in FIG. 22 from the recovery DB and changes the cooking step #i+1 in the recipe data before the change to the cooking step #x in the acquired partial recipe data (step S160). Accordingly, as illustrated in FIG. 23, in the recipe data after the change, compared with the recipe data before the change, the cooking step next to the cooking step #i set as the target of success or failure determination of the cooking work is changed from "heating (stationary)" in the cooking step #i+1 of the recipe data before the change to "sauteing (pot operation)" in the cooking step #x of the partial recipe data.

As explained above, even when there is a cooking order mistake as in the case in which the heating operation is performed next to the ingredient addition by mistake when it is originally necessary to perform the sauteing operation next to the ingredient input, it is possible to recover from the failure in the cooking work by changing, from the initial recipe, the cooking step next to the cooking step in which the cooking order mistake is found.

### <Change of content of the cooking steps>

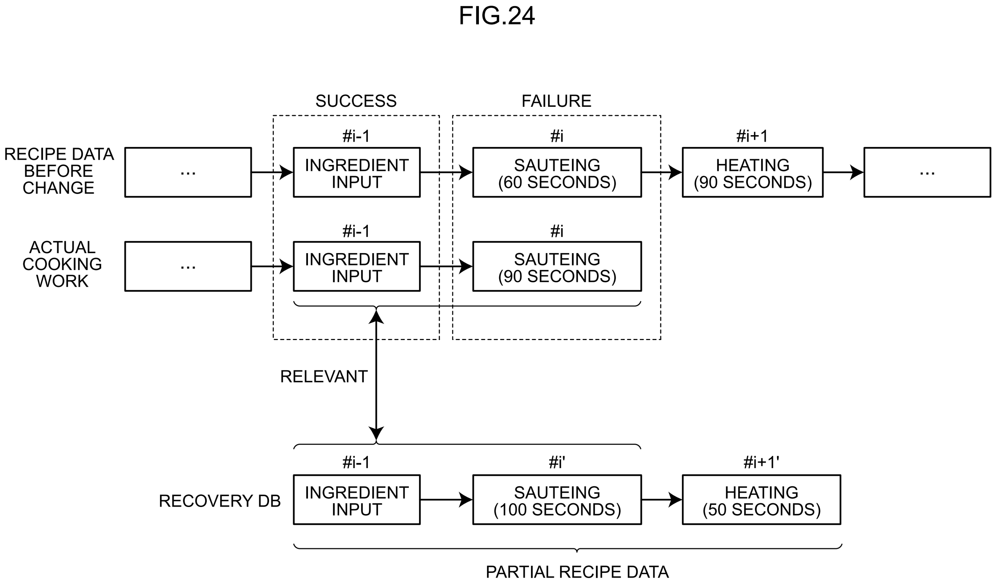

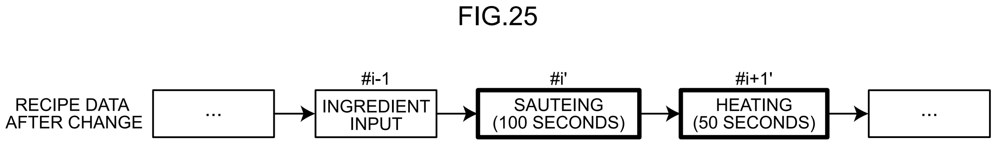

FIG. 24 and FIG. 25 are diagrams illustrating operation examples of a change in content of the cooking steps according to the second embodiment of the present disclosure.

As illustrated in FIG. 24, in the recipe data before the change, when, whereas the cooking work in the cooking step #i, which is the target of the success or failure determination of the cooking work, is "sauteing" and the cooking work in the cooking step #i-1 immediately before the cooking step #i is "ingredient input", the actual cooking work in the cooking step #i is "sauteing" and the actual cooking work in the cooking step #i-1 is "ingredient input", the control unit 135 determines that there is no cooking order mistake. On the other hand, as illustrated in FIG. 24, in the recipe data before the change, when, whereas the cooking work of cooking step #i, which is the target of the success or failure determination of the cooking work, is "sauteing (60 seconds)", sauteing operation for 90 seconds is performed in the cooking step #i of the actual cooking work, the temperature error in the cooking step #i is +30 seconds. Here, as illustrated in FIG. 17, since a temperature error of +30 seconds in the cooking step #i is not within the first allowable range, the control unit 135 determines that the cooking work in the cooking step #i has been unsuccessful (step S100 to step S130). The temperature error of +30 seconds in the cooking step #i is not within the second allowable range either (step S140 to step S180).

Thus, the control unit 135 searches through the recovery DB with a set of "sauteing (90 seconds)", which is the cooking step #i in which the failure in the actual cooking work has occurred and "ingredient input", which is the cooking step #i-1 immediately before the cooking step #i and is the cooking step #i-1 in which the cooking work is successful. At this time, the control unit 135 searches for partial recipe data having "sauteing" work for which a time of 90 seconds or more is set, the partial recipe data having a total work time closest to 150 seconds using, for example, the nearest neighbor method. As explained above, a large number of pieces of partial recipe data are registered in advance in the recovery DB. For example, in the partial recipe data illustrated in FIG. 24, it is defined that the cooking steps are "ingredient input to sauteing (100 seconds) to heating (50 seconds) ".

In the search through the recovery DB, the cooking order in the set of "ingredient input" in the cooking step #i-1 in the actual cooking work and "sauteing (90 seconds)" in the cooking step #i in the actual cooking work coincides a part of the cooking order in the partial recipe data defined as being "ingredient input to sauteing (100 seconds) to heating (50 seconds)" is specified. Whereas the work time of "sauteing" in the cooking step #i' in the partial recipe data is "100 seconds", the work time measured at the time of the sauteing work in the cooking step #i in the actual cooking work is "90 seconds". Thus, the partial recipe data illustrated in FIG. 24 is relevant according to the search through the recovery DB.
Therefore, the control unit 135 acquires the partial recipe data illustrated in FIG. 24 from the recovery DB and changes each of contents of both of the cooking step #i and the cooking step #i+1 in the recipe data before the change to content of each of the cooking step #i' and the cooking step #i+1' in the acquired partial recipe data (step S180). Accordingly, as illustrated in FIG. 25, in the recipe data after the change, compared with the recipe data before the change, the content of the cooking step #i set as the target of the success or failure determination of the cooking work is changed from "sauteing (60 seconds)" to "sauteing (100 seconds)" in the cooking step #i' in the partial recipe data and the content of the cooking step #i+1 next to the cooking step #i is changed from "heating (90 seconds)" to "sauteing (50 seconds)" in the cooking step #i+1' in the partial recipe data. That is, before and after the change of the recipe data, the heating time is reduced from 90 seconds to 50 seconds by time equivalent to an increase in the working time of "sauteing" from 60 seconds to 100 seconds.

Note that, in the above explanation, the control unit 135 changes the contents of both of the cooking step #i and the cooking step #i+1 in the recipe data before the change. However, of the cooking step #i and the cooking step #i+1 in the recipe data before the change, the control unit 135 may change only the content of the cooking step #i+1, which is the cooking step next to the cooking step #i without changing the content of the cooking step #i, which is the target of the success or failure determination of the cooking work.

As explained above, even when the cooking parameter error in the cooking step #i, which is the target of the success or failure determination of the cooking work, is outside the second allowable range, it is possible to recover from the failure in the cooking work by changing, from the initial recipe, at least the content of the cooking step #i+1 of the cooking step #i and the cooking step #i+1.

### <Recognition of a cook posture>

For example, the control unit 135 recognizes, based on a camera image, a cook posture using a learned model by machine learning. The trained model is prepared in, for example, the Web server 42. The learned model is generated in advance by machine learning using, as teacher data, an image of the cook H who actually performs cooking according to recipe data and an image of a human body other than the cook H. The cook posture in the learned model is classified into, for example, three postures of "stationary", "ingredient input", and "pot operation" like the target posture. During the reproduction cooking, the control unit 135 recognizes, based on the camera image, whether the cook posture is "stationary", "ingredient input", or "pot operation" using the learned model. Note that the control unit 135 may recognize a cook posture other than "stationary", "ingredient input", and "pot operation".

Note that cooking parameters are not limited to the time/temperature/weight (TTW). The cooking parameters may be parameters concerning cooking, parameters being based on sensor data. The cooking parameters may be directly observed sensor values (for example, TTW) or evaluation values indirectly derived from the sensor values (for example, Cook Values).

The second embodiment is explained above.

### [Third Embodiment]

The series of processing explained above can be executed by hardware or can be executed by software. When the series of processing is executed by software, a program constituting the software is installed in a computer incorporated in dedicated hardware, a general-purpose personal computer, or the like from a program recording medium.

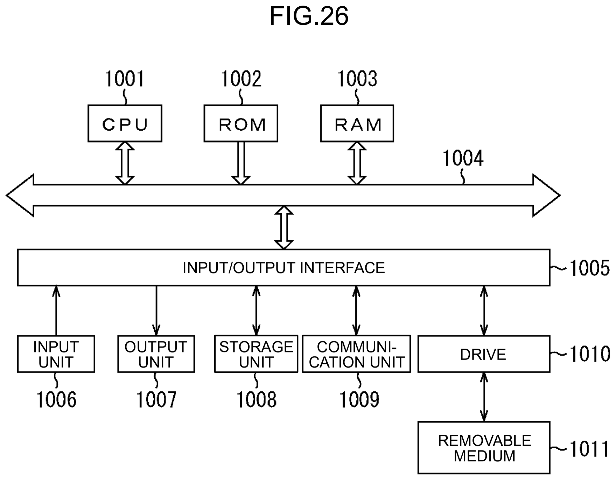

FIG. 26 is a diagram illustrating a hardware configuration example of a computer according to a third embodiment of the present disclosure. The computer having the configuration as illustrated in FIG. 26 is provided in the IH stove 11. An external device such as the Web server 42 is also configured by the computer having the configuration as illustrated in FIG. 26.

In FIG. 26, a CPU (Central Processing Unit) 1001, a ROM (Read Only Memory) 1002, and a RAM (Random Access Memory) 1003 are mutually connected by a bus 1004.

An input/output interface 1005 is further connected to the bus 1004. An input unit 1006 including a keyboard and a mouse and an output unit 1007 including a display and a speaker are connected to the input/output interface 1005. A storage unit 1008 including a hard disk and a nonvolatile memory, a communication unit 1009 including a network interface, and a drive 1010 that drives a removable medium 1011 are connected to the input/output interface 1005.

In the computer configured as explained above, for example, the CPU 1001 loads a program stored in the storage unit 1008 to the RAM 1003 via the input/output interface 1005 and the bus 1004 and executes the program, whereby the series of processing explained above is performed.

The program to be executed by the CPU 1001 is recorded in, for example, the removable medium 1011, provided via a wired or wireless transmission medium such as a local area network, the Internet, or digital broadcasting, and installed in the storage unit 1008.

The program to be executed by the computer may be a program in which processing is performed in time series or may be a program in which processing is performed in parallel or at necessary timing such as when a call is made.

In the present disclosure, a system means a set of a plurality of constituent elements (devices, modules (parts), and the like) and it does not matter whether all the constituent elements are present in the same housing. Thus, all of a plurality of devices housed in separate housings and connected via a network and one device in which a plurality of modules are housed in one housing are systems.

The third embodiment is explained above.

### [Effects of the technology of the disclosure]

As explained above, the cooking support system (the cooking support system 1 in the embodiment) of the present disclosure includes a retaining unit (the storage 34 and the Web server 42 in the embodiment), a control unit (the control unit 135 in the embodiment), and a presentation unit (the information presentation unit 136 in the embodiment). The retaining unit retains recipe data including information indicating content of cooking work and information indicating a target state for each cooking step of a plurality of cooking steps in which each of target states is defined by target parameters based on sensor data measurable at the time of cooking. The control unit compares a cooking state in a cooking step set as a target and the target state to thereby perform success or failure determination for the cooking work in the cooking step set as the target. When it is determined that the cooking work has been unsuccessful, the presentation unit presents information indicating that the cooking work has been unsuccessful.

Accordingly, a cook can grasp, during cooking, whether the cooking is correctly performed and can notice a mistake of the cooking during the cooking. Therefore, it is possible to increase the reproducibility of finish of a dish.

For example, the target state is defined by at least one target parameter among an elapsed time from start time of a cooking step, the temperature of a heating target object or a heating medium, and the weight of the heating target object. When the target state is defined by the elapsed time, the control unit performs the success or failure determination based on whether an error between an elapsed time from start time of a cooking step set as a target and the target state is within an allowable range. When the target state is defined by the temperature, the control unit performs the success or failure determination based on whether an error between temperature measured by a temperature sensor and the target state is within an allowable range. When the target state is defined by the weight, the control unit performs the success or failure determination based on whether an error between weight measured by a weight sensor and the target state is within an allowable range.

Consequently, it is possible to accurately perform the success or failure determination for the cooking work.

The allowable range includes a first allowable range and a second allowable range larger than the first allowable range. When the error is not within the first allowable range, the control unit determines that the cooking work has been unsuccessful.

Consequently, it is possible to differentiate recovery processing for a failure according to the magnitude of an error at the time of a failure in cooking work.

When the error is not within the second allowable range, the control unit changes, from the recipe data, of content of a first cooking step set as a target of the success or failure determination and content of a second cooking step next to the first cooking step, at least the content of the second cooking step.

Accordingly, it is possible to recover from the failure in the cooking work.

The control unit performs the success or failure determination based on an image of a hand of the cook captured by a camera and, when execution order of cooking steps recognized from the image of the hand of the cook is different from the order of a plurality of cooking steps indicated in the recipe data, determines that the cooking work has been unsuccessful.

Consequently, it is possible to accurately perform the success or failure determination for the cooking work.

When determining that the cooking work has been unsuccessful, the control unit changes, from the recipe data, a cooking step next to the cooking step set as the target of the success or failure determination.

Accordingly, it is possible to recover from the failure in the cooking work.

Note that embodiments of the technology of the present disclosure are not limited to the embodiments explained above. Various changes are possible without departing from the gist of the technology of the present disclosure.

For example, the technology of the present disclosure can adopt a configuration of cloud computing in which one function is shared and processed in cooperation by a plurality of devices via a network.

The steps in the processing procedure explained above can be executed by one device or can be shared and executed by a plurality of devices.

Furthermore, when a plurality of kinds of processing are included in one step, the plurality of kinds of processing included in the one step can be shared and executed by a plurality of devices besides being executed by one device.

The effects described in the present specification are only examples and are not limited and other effects may be present.

The technology of the present disclosure can also adopt the following configurations.
(1) A cooking support system including:
   a retaining unit that retains, for each cooking step of a plurality of cooking steps in which each of target states is defined by target parameters based on sensor data measurable at a time of cooking, recipe data including information indicating content of cooking work and information indicating the target state;
   a control unit that compares a cooking state in the cooking step set as a target and the target state to thereby perform success or failure determination for cooking work in the cooking step set as the target; and
   a presentation unit that, when it is determined that the cooking work has been unsuccessful, presents information indicating that the cooking work has been unsuccessful.
(2) The cooking support system described in (1), wherein the target state is defined by at least one target parameter among an elapsed time from start time of the cooking step, temperature of a heating target object or a heating medium, and weight of the heating target object.
(3) The cooking support system described in (2), wherein, when the target state is defined by the elapsed time, the control unit performs the success or failure determination based on whether an error between an elapsed time from start time of the cooking step set as a target and the target state is within an allowable range.
(4) The cooking support system described in (3), wherein
   the allowable range includes a first allowable range and a second allowable range larger than the first allowable range, and
   when the error is not within the first allowable range, the control unit determines that the cooking work has been unsuccessful.
(5) The cooking support system described in (4), wherein, when the error is not within the second allowable range, the control unit changes, from the recipe data, of content of the first cooking step set as a target of the success or failure determination and content of a second cooking step next to the first cooking step, at least the content of the second cooking step.
(6) The cooking support system described in (2), wherein, when the target state is defined by the temperature, the control unit performs the success or failure determination based on whether an error between temperature measured by a temperature sensor and the target state is within an allowable range.
(7) The cooking support system described in (6), wherein
   the allowable range includes a first allowable range and a second allowable range larger than the first allowable range, and
   when the error is not within the first allowable range, the control unit determines that the cooking work has been unsuccessful.
(8) The cooking support system described in (7), wherein,
   when the error is not within the second allowable range, the control unit changes, from the recipe data, of content of a first cooking step set as a target of the success or failure determination and content of a second cooking step next to the first cooking step, at least the content of the second cooking step.
(9) The cooking support system described in (2), wherein, when the target state is defined by the weight, the control unit performs the success or failure determination based on whether an error between weight measured by a weight sensor and the target state is within an allowable range.
(10) The cooking support system described in (9), wherein
   the allowable range includes a first allowable range and a second allowable range larger than the first allowable range, and
   when the error is not within the first allowable range, the control unit determines that the cooking work has been unsuccessful.
(11) The cooking support system described in (10), wherein,
   when the error is not within the second allowable range, the control unit changes, from the recipe data, of content of a first cooking step set as a target of the success or failure determination and content of a second cooking step next to the first cooking step, at least the content of the second cooking step.
(12) The cooking support system described in (1), wherein
   the control unit performs the success or failure determination based on an image of a hand of a cook captured by a camera.
(13) The cooking support system described in (12), wherein, when execution order of cooking steps recognized from the image is different from order of the plurality of cooking steps indicated in the recipe data, the control unit determines that the cooking work has been unsuccessful.
(14) The cooking support system described in (13), wherein, when determining that the cooking work has been unsuccessful, the control unit changes, from the recipe data, a cooking step next to a cooking step set as a target of the success or failure determination.
(15) The cooking support system described in (1), wherein the control unit performs the success or failure determination using a learned model by machine learning.
(16) A cooking support method including a computer:
   retaining, for each cooking step of a plurality of cooking steps in which each of target states is defined by target parameters based on sensor data measurable at a time of cooking, recipe data including information indicating content of cooking work and information indicating the target state;
   comparing a cooking state in the cooking step set as a target and the target state to thereby perform success or failure determination for cooking work in the cooking step set as the target; and
   when it is determined that the cooking work has been unsuccessful, presenting information indicating that the cooking work has been unsuccessful.
(17) A cooking support program for causing a computer to execute processing for:
   retaining, for each cooking step of a plurality of cooking steps in which each of target states is defined by target parameters based on sensor data measurable at a time of cooking, recipe data including information indicating content of cooking work and information indicating the target state;
   comparing a cooking state in the cooking step set as a target and the target state to thereby perform success or failure determination for cooking work in the cooking step set as the target; and
   when it is determined that the cooking work has been unsuccessful, presenting information indicating that the cooking work has been unsuccessful.

### Reference Signs List

- 1: COOKING SUPPORT SYSTEM

- 11: IH STOVE
- 21: DISPLAY
- 22: CAMERA
- 23: MICROPHONE
- 24: LIGHTING EQUIPMENT
- 25: ROUTER
- 31: PROCESSOR
- 32: TEMPERATURE SENSOR
- 33: WEIGHT SENSOR
- 34: STORAGE
- 41: SMARTPHONE
- 42: Web SERVER
- 101: RECORDING PROCESSING UNIT
- 102: RECIPE DATA CREATION UNIT
- 103: REPRODUCTION PROCESSING UNIT
- 111: COOKING ENVIRONMENT MEASUREMENT UNIT
- 112: SENSOR DATA ACQUISITION UNIT
- 113: USER INPUT DETECTION UNIT
- 114: INFORMATION RECORDING UNIT
- 121: STEP ORGANIZATION UNIT
- 122: TARGET STATE SETTING UNIT
- 123: COOKING WORK SETTING UNIT
- 124: INFORMATION RECORDING UNIT
- 125: RECIPE DATA MANAGEMENT UNIT
- 131: RECIPE DATA ACQUISITION UNIT
- 132: COOKING ENVIRONMENT MEASUREMENT UNIT
- 133: SENSOR DATA ACQUISITION UNIT
- 134: USER INPUT DETECTION UNIT
- 135: CONTROL UNIT
- 136: INFORMATION PRESENTATION UNIT

## Claims

1. A cooking support system comprising:
a retaining unit that retains, for each cooking step of a plurality of cooking steps in which each of target states is defined by target parameters based on sensor data measurable at a time of cooking, recipe data including information indicating content of cooking work and information indicating the target state;
a control unit that compares a cooking state in the cooking step set as a target and the target state to thereby perform success or failure determination for cooking work in the cooking step set as the target; and
a presentation unit that, when it is determined that the cooking work has been unsuccessful, presents information indicating that the cooking work has been unsuccessful.

2. The cooking support system according to claim 1, wherein
the target state is defined by at least one target parameter among an elapsed time from start time of the cooking step, temperature of a heating target object or a heating medium, and weight of the heating target object.

3. The cooking support system according to claim 2, wherein,
when the target state is defined by the elapsed time, the control unit performs the success or failure determination based on whether an error between an elapsed time from start time of the cooking step set as a target and the target state is within an allowable range.

4. The cooking support system according to claim 2, wherein,
when the target state is defined by the temperature, the control unit performs the success or failure determination based on whether an error between temperature measured by a temperature sensor and the target state is within an allowable range.

5. The cooking support system according to claim 2, wherein,
when the target state is defined by the weight, the control unit performs the success or failure determination based on whether an error between weight measured by a weight sensor and the target state is within an allowable range.

6. The cooking support system according to any one of claims 3 to 5, wherein
the allowable range includes a first allowable range and a second allowable range larger than the first allowable range, and
when the error is not within the first allowable range, the control unit determines that the cooking work has been unsuccessful.

7. The cooking support system according to claim 6, wherein,
when the error is not within the second allowable range, the control unit changes, from the recipe data, of content of a first cooking step set as a target of the success or failure determination and content of a second cooking step next to the first cooking step, at least the content of the second cooking step.

8. The cooking support system according to claim 1, wherein
the control unit performs the success or failure determination based on an image of a hand of a cook captured by a camera.

9. The cooking support system according to claim 8, wherein,
when execution order of cooking steps recognized from the image is different from order of the plurality of cooking steps indicated in the recipe data, the control unit determines that the cooking work has been unsuccessful.

10. The cooking support system according to claim 9, wherein,
when determining that the cooking work has been unsuccessful, the control unit changes, from the recipe data, a cooking step next to a cooking step set as a target of the success or failure determination.

11. The cooking support system according to claim 1, wherein
the control unit performs the success or failure determination using a learned model by machine learning.

12. A cooking support method comprising a computer:
retaining, for each cooking step of a plurality of cooking steps in which each of target states is defined by target parameters based on sensor data measurable at a time of cooking, recipe data including information indicating content of cooking work and information indicating the target state;
comparing a cooking state in the cooking step set as a target and the target state to thereby perform success or failure determination for cooking work in the cooking step set as the target; and
when it is determined that the cooking work has been unsuccessful, presenting information indicating that the cooking work has been unsuccessful.

13. A cooking support program for causing a computer to execute processing for:
retaining, for each cooking step of a plurality of cooking steps in which each of target states is defined by target parameters based on sensor data measurable at a time of cooking, recipe data including information indicating content of cooking work and information indicating the target state;
comparing a cooking state in the cooking step set as a target and the target state to thereby perform success or failure determination for cooking work in the cooking step set as the target; and
when it is determined that the cooking work has been unsuccessful, presenting information indicating that the cooking work has been unsuccessful.
